# EUROPEAN PATENT APPLICATION

(11) **EP 4 513 959 A1**
(43) Date of publication of application: **26.02.2025**
(21) Application number: 22937758.5
(22) Date of filing: 19.04.2022
(51) Int. Cl.: H04W 36/00, H04W 76/10

(54) **MULTIPATH CONFIGURATION METHOD, APPARATUS, AND SYSTEM**

(71) Applicant: Fujitsu Limited, Kawasaki-shi, Kanagawa 211-8588 (JP)
(72) Inventor: LI, Guorong, Beijing 100022 (CN); JIA, Meiyi, Beijing 100022 (CN); YI, Su, Beijing 100022 (CN); WANG, Xin, Beijing 100022 (CN)
(74) Representative: Haseltine Lake Kempner LLP
(86) International application number: PCT/CN2022/087654
(87) International publication number: WO 2023/201520

(57) **Abstract**

Embodiments of this disclosure provide a multi-path configuration method and apparatus and a system. The multi-path configuration method includes: transmitting configuration information to a remote terminal equipment, the configuration information including information for adding and/or modifying and/or deleting a path, the path being a direct path and/or an indirect path between the remote terminal equipment and a network device.

## Description

### Field

This disclosure relates to the field of communication.

### Background

In Release 17, sidelink relay (SL relay) was studied, which includes a scenario of UE-to-Network relay. In this scenario, a remote UE communicates with a network device via a relay UE, wherein NR Uu is used on a Uu link of the relay user equipment, and an NR sidelink is used on a PC5 interface between the remote UE and the relay UE. In the scenario of UE-to-Network relay, the relay UE is also referred to as a UE-to-Network relay UE.

It should be noted that the above description of the background is merely provided for clear and complete explanation of this disclosure and for easy understanding by those skilled in the art. And it should not be understood that the above technical solution is known to those skilled in the art as it is described in the background of this disclosure.

### Summary

It was found by the inventors that in Release 17, a remote terminal equipment may communicate with a network device in the relay manner described above, or the remote terminal equipment may directly communicate with the network device. In other words, in Release 17, a remote terminal equipment simultaneously supports only a single path to communicate with a network device.

In Release 18, solutions that support multi-path or multiple paths will be studied. A multi-path scenario may be: a remote terminal equipment may be connected to the same network device (e.g. a gNB) by simultaneously using a direct path and an indirect path. For example, the direct path may be that the remote terminal equipment is connected directly to the network device via a Uu interface, and the indirect path may be that the remote terminal equipment is connected to the network device via a layer 2 (L2) UE-to-Network relay.

Currently, in multi-path solutions, there is no solution for how to configure more than one paths (such as a direct path and an indirect path) between a remote terminal equipment and a network device.

**In** order to solve at least one of the above problems, embodiments of this disclosure provide a multi-path configuration method and apparatus and a system.

According to one aspect of the embodiments of this disclosure, there is provided a multi-path configuration apparatus. The apparatus is applicable to a network device, and includes: a transmitting unit configured to transmit configuration information to a remote UE, the configuration information including information for adding and/or modifying and/or deleting a path, the path being a direct path and/or an indirect path between the remote UE and a network device.

According to another aspect of the embodiments of this disclosure, there is provided a multi-path configuration method. The method is applicable to a network device, and includes: transmitting configuration information to a remote UE, the configuration information including information for adding and/or modifying and/or deleting a path, the path being a direct path and/or an indirect path between the remote UE and a network device.

According to a further aspect of the embodiments of this disclosure, there is provided a network device, including a memory and a processor, the memory storing a computer program, and the processor being configured to execute the computer program to carry out the multi-path configuration method as described in the other aspect of the embodiments of this disclosure.

According to still another aspect of the embodiments of this disclosure, there is provided a multi-path configuration apparatus. The apparatus is applicable to a remote UE, and includes: a receiving unit configured to receive configuration information transmitted by a network device, the configuration information including information for adding and/or modifying and/or deleting a path, the path being a direct path and/or an indirect path between a remote terminal equipment and a network device; and
a configuring unit configured to add and/or modify and/or delete the path according to the configuration information.

According to yet another aspect of the embodiments of this disclosure, there is provided a multi-path configuration method. The method is applicable to a remote UE, and includes: receiving configuration information transmitted by a network device, the configuration information including information for adding and/or modifying and/or deleting a path, the path being a direct path and/or an indirect path between a remote terminal equipment and a network device; and
adding and/or modifying and/or deleting the path according to the configuration information.

According to yet still another aspect of the embodiments of this disclosure, there is provided a remote UE, including a memory and a processor, the memory storing a computer program, and the processor being configured to execute the computer program to carry out the multi-path configuration method as described in the yet another aspect of the embodiments of this disclosure.

According to yet further another aspect of the embodiments of this disclosure, there is provided a multi-path configuration apparatus. The apparatus is applicable to a relay terminal equipment, and includes: a receiving unit configured to receive a radio resource control reconfiguration complete message or PC5 connection establishment information transmitted by a remote terminal equipment; and
a configuring unit configured to enter a radio resource control connected state after the receiving unit receives the radio resource control reconfiguration complete message or PC5 connection establishment information.

According to yet further still another aspect of the embodiments of this disclosure, there is provided a multi-path configuration method. The method is applicable to a relay terminal equipment, and includes: receiving a radio resource control reconfiguration complete message or PC5 connection establishment information transmitted by a remote terminal equipment; and
entering a radio resource control connected state after the receiving unit receives the radio resource control reconfiguration complete message or PC5 connection establishment information.

According to further still another aspect of the embodiments of this disclosure, there is provided a relay terminal equipment, including a memory and a processor, the memory storing a computer program, and the processor being configured to execute the computer program to carry out the multi-path configuration method as described in the yet further still another aspect of the embodiments of this disclosure.

According to even further another aspect of the embodiments of this disclosure, there is provided a communication system, including the network device and/or the remote UE and/or the relay terminal equipment as described in the further aspect of the embodiments of this disclosure.

One of the advantages of the embodiments of this disclosure exists in that the network device transmits configuration information to the remote UE, so that the remote UE performs path configuration according to the configuration information in a multi-path scenario, which contributes to the remote UE performing data transmission by using more than one paths and improves reliability and rate of data transmission of the remote UE.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising/includes/including" when used in this specification is taken to specify the presence of stated features, integers, steps or components but does not preclude the presence or addition of one or more other features, integers, steps, components or groups thereof.

### Brief Description of the Drawings

Elements and features depicted in one drawing or embodiments of the disclosure may be combined with elements and features depicted in one or more additional drawings or embodiments. Moreover, in the drawings, like reference numerals designate corresponding parts throughout the several views and may be used to designate like or similar parts in more than one embodiment.
FIG. 1 is a schematic diagram of a scenario 1 of remote UE-to-Network relay;
FIG. 2 is a schematic diagram of a scenario 2 of remote UE-to-Network relay;
FIG. 3 is a schematic diagram of a scenario 3 of remote UE-to-Network relay;
FIG. 4 is a schematic diagram of a communication system of embodiments of this disclosure;
FIG. 5 is a schematic diagram of a multi-path scenario of embodiments of this disclosure;
FIG. 6 is a schematic diagram of a multi-path protocol stack structure of embodiments of this disclosure;
FIG. 7 is a schematic diagram of the multi-path configuration method of embodiments of a first aspect of this disclosure;
FIG. 8 is another schematic diagram of the multi-path configuration method of the embodiments of the first aspect of this disclosure;
FIG. 9 is a further schematic diagram of the multi-path configuration method of the embodiments of the first aspect of this disclosure;
FIG. 10 is still another schematic diagram of the multi-path configuration method of the embodiments of the first aspect of this disclosure;
FIG. 11 is a schematic diagram of the multi-path configuration apparatus of embodiments of a second aspect of this disclosure;
FIG. 12 is a schematic diagram of the multi-path configuration method of embodiments of a third aspect of this disclosure;
FIG. 13 is a schematic diagram of the multi-path configuration apparatus of embodiments of a fourth aspect of this disclosure;
FIG. 14 is a schematic diagram of the multi-path configuration method of embodiments of a fifth aspect of this disclosure;
FIG. 15 is a schematic diagram of the multi-path configuration apparatus of embodiments of a sixth aspect of this disclosure;
FIG. 16 is a schematic diagram of the terminal equipment of embodiments of a seven aspect of this disclosure; and
FIG. 17 is a schematic diagram of the network device of the embodiments of the seventh aspect of this disclosure.

### Detailed Description

These and further aspects and features of this disclosure will be apparent with reference to the following description and attached drawings. **In** the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes, modifications and equivalents coming within the spirit and terms of the appended claims.

**In** the embodiments of this disclosure, terms "first", and "second", etc., are used to differentiate different elements with respect to names, and do not indicate spatial arrangement or temporal orders of these elements, and these elements should not be limited by these terms. Terms "and/or" include any one and all combinations of one or more relevantly listed terms. Terms "contain", "include" and "have" refer to existence of stated features, elements, components, or assemblies, but do not exclude existence or addition of one or more other features, elements, components, or assemblies.

In the embodiments of this disclosure, single forms "a", and "the", etc., include plural forms, and should be understood as "a kind of" or "a type of" in a broad sense, but should not defined as a meaning of "one"; and the term "the" should be understood as including both a single form and a plural form, except specified otherwise. Furthermore, the term "according to" should be understood as "at least partially according to", the term "based on" should be understood as "at least partially based on", except specified otherwise.

In the embodiments of this disclosure, the term "communication network" or "wireless communication network" may refer to a network satisfying any one of the following communication standards: long term evolution (LTE), long term evolution-advanced (LTE-A), wideband code division multiple access (WCDMA), and high-speed packet access (HSPA), etc.

And communication between devices in a communication system may be performed according to communication protocols at any stage, which may, for example, include but not limited to the following communication protocols: 1G (generation), 2G, 2.5G, 2.75G, 3G, 4G, 4.5G, and 5G and new radio (NR) in the future, etc., and/or other communication protocols that are currently known or will be developed in the future.

In the embodiments of this disclosure, the term "network device", for example, refers to a device in a communication system that accesses a user equipment to the communication network and provides services for the user equipment. The network device may include but not limited to the following devices: a base station (BS), an access point (AP), a transmission reception point (TRP), a broadcast transmitter, a mobile management entity (MME), a gateway, a server, a radio network controller (RNC), a base station controller (BSC), etc.

The base station may include but not limited to a node B (NodeB or NB), an evolved node B (eNodeB or eNB), and a 5G base station (gNB), etc. Furthermore, it may include a remote radio head (RRH), a remote radio unit (RRU), a relay, or a low-power node (such as a femto, and a pico, etc.). The term "base station" may include some or all of its functions, and each base station may provide communication coverage for a specific geographical area. And a term "cell" may refer to a base station and/or its coverage area, depending on a context of the term.

In the embodiments of this disclosure, the term "user equipment (UE)" or "terminal equipment (TE) or terminal device" refers to, for example, an equipment accessing to a communication network and receiving network services via a network device. The user equipment may be fixed or mobile, and may also be referred to as a mobile station (MS), a terminal, a subscriber station (SS), an access terminal (AT), or a station, etc.

The terminal equipment may include but not limited to the following devices: a cellular phone, a personal digital assistant (PDA), a wireless modem, a wireless communication device, a hand-held device, a machine-type communication device, a lap-top, a cordless telephone, a smart cell phone, a smart watch, and a digital camera, etc.

For another example, in a scenario of the Internet of Things (IoT), etc., the terminal equipment may also be a machine or a device performing monitoring or measurement. For example, it may include but not limited to a machine-type communication (MTC) terminal, a vehicle mounted communication terminal, a device to device (D2D) terminal, and a machine to machine (M2M) terminal, etc.

Moreover, the term "network side" or "network device side" refers to a side of a network, which may be a base station or one or more network devices including those described above. The term "user side" or "terminal side" or "terminal equipment side" refers to a side of a user or a terminal, which may be a UE, and may include one or more terminal equipments described above. "A device" in this text may refer to a network device, and may also refer to a terminal equipment, except otherwise specified.

Scenarios of UE-to-Network relay shall be described below by way of examples; however, this disclosure is not limited thereto.

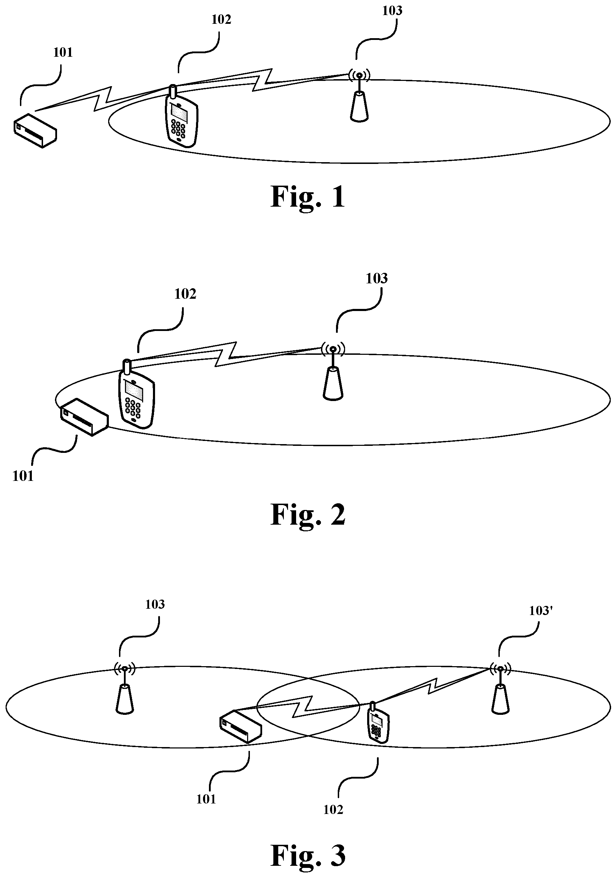

FIG. 1 is a schematic diagram of a scenario 1 of remote UE-to-Network relay, FIG. 2 is a schematic diagram of a scenario 2 of remote UE-to-Network relay, and FIG. 3 is a schematic diagram of a scenario 3 of remote UE-to-Network relay.

As shown in FIG. 1, in scenario 1, a first terminal equipment 101 (remote UE) is out of coverage (OOC) of a network device 103, and a second terminal equipment 102 (relay UE) is in coverage (IC) of the network device 103.

As shown in FIG. 2, in scenario 2, the first terminal equipment 101 (remote user equipment) is in coverage (IC) of the network device 103, and the second terminal equipment 102 (relay user equipment) is in coverage of the network device 103.

As shown in FIG. 3, in scenario 3, the first terminal equipment 101 (remote user equipment) is in coverage of the network device 103, and the second terminal equipment 102 (relay user equipment) is in coverage of another network device 103'.

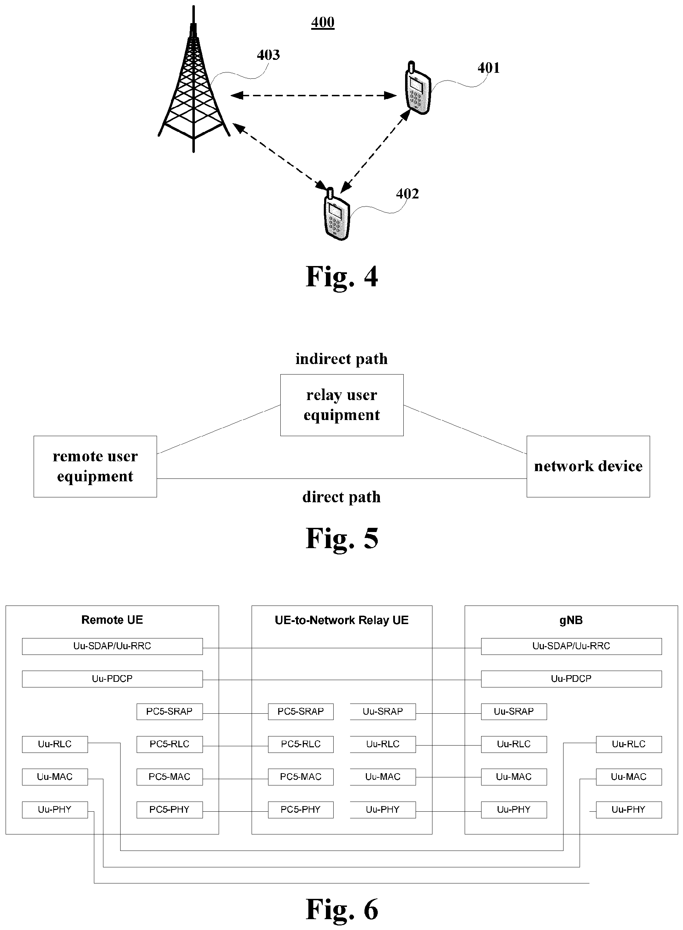

FIG. 4 is a schematic diagram of a communication system of embodiments of this disclosure, illustrating a case taking a remote user equipment, a relay user equipment and a network device as an example. As shown in FIG. 4, a communication system 400 may include a remote user equipment 401, a relay user equipment 402 and a network device 403. The remote user equipment 401 is connected to the network device 403 via a direct path and an indirect path. For the sake of simplicity, description is given in FIG. 4 by taking two terminal equipments (one remote user equipment and one relay user equipment) and one network device as an example; however, the embodiments of this disclosure is not limited thereto.

In the embodiments of this disclosure, existing services or services that may be implemented in the future may be performed between the network device 403 and the remote user equipment 401 and the relay user equipment 402. For example, such services may include but not limited to an enhanced mobile broadband (eMBB), massive machine type communication (MTC), ultra-reliable and low-latency communication (URLLC), etc.

FIG. 5 is a schematic diagram of a multi-path scenario of embodiments of this disclosure. As shown in FIG. 5, in the embodiments of this disclosure, the remote user equipment may communicate with the network device via a direct path and an indirect path simultaneously. For example, the remote user equipment may communicate with the network device via a Uu interface (direct path), and communicate with the same network device via the relay user equipment (indirect path).

FIG. 6 is a schematic diagram of a multi-path protocol stack structure of embodimen of this disclosure. As shown in FIG. 6, the direct path between the remote user equipment and the network device uses a Uu interface protocol stack, and the indirect path between the remote user equipment and the network device is transmitted via L2 UE-to-Network relay, using the PC5 interface and a Uu interface protocol stack.

In some embodiments, as shown in FIG. 6, an RRC layer, an SDAP layer and a PDCP layer in the remote user equipment are equivalent to an RRC layer, an SDAP layer and a PDCP layer in the network device, and data of the PDCP layer of the remote user equipment may be transmitted to the network device via the indirect path passing the relay user equipment. For example, a PDCP PDU of the remote user equipment may be transmitted to the relay UE via a PC5-SRAP, a PC5-RLC, a PC5-MAC and a PC5-PHY, and then the relay UE transmits the data to a gNB via its own Uu interface protocol stack (a Uu SRAP, a Uu RLC, a Uu MAC, and a Uu PHY). The gNB side receives the data from a peer Uu interface protocol stack of the relay UE, and transmits the data to the Uu-PDCP of the gNB for processing. Or, data of the PDCP layer of the remote user equipments may be transmitted to the network device via a direct path. For example, the PDCP PDU of the remote user equipment may be transmitted to the gNB via a Uu RLC, a Uu MAC, and a Uu PHY. The gNB side receives the data from a peer Uu interface protocol stack of the remote UE, and transmits the data to the Uu-PDCP of the gNB for processing. In addition, in the direct path and/or the indirect path, there may be one or more RLC entities (Uu RLC entities or PC5 RLC entities) associated with a PDCP entity of a radio bearer.

In some embodiments, as shown in FIG. 6, in the protocol stack of the gNB side, one Uu MAC entity may also be used to process data of the remote user equipment and the relay user equipment.

In some embodiments, as shown in FIG. 6, in the remote user equipment, one MAC entity may also be used to perform PC5-MAC and Uu MAC operations.

Various implementations of the embodiments of this disclosure shall be described below with reference to the accompanying drawings. These implementations are illustrative only, and are not intended to limit this disclosure.

### Embodiments of a first aspect

The embodiments of this disclosure provide a multi-path configuration method, applicable to a network device, such as the network device 403 in FIG. 4.

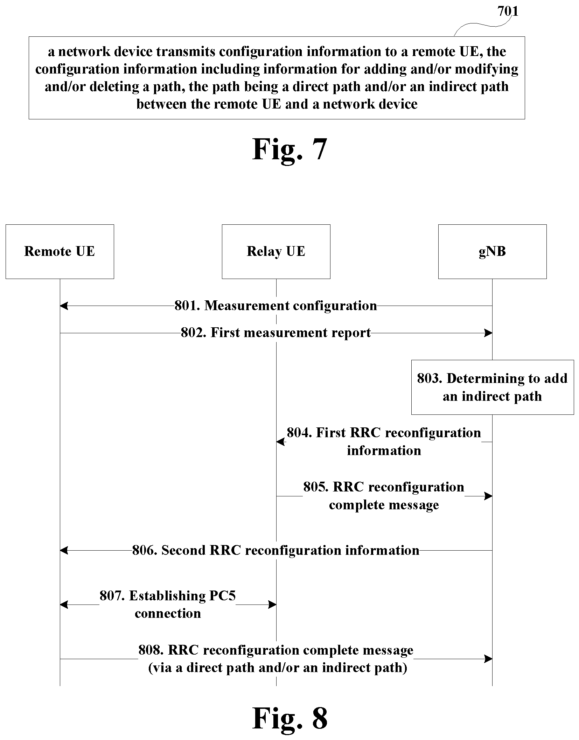

FIG. 7 is a schematic diagram of the multi-path configuration method of the embodiments of the first aspect of this disclosure. As shown in FIG. 7, the method includes:
701: a network device transmits configuration information to a remote UE, the configuration information including information for adding and/or modifying and/or deleting a path, the path being a direct path and/or an indirect path between the remote UE and a network device.

It should be noted that FIG. 7 only schematically illustrates the embodiments of this disclosure; however, this disclosure is not limited thereto. For example, an order of execution of the steps may be appropriately adjusted, and furthermore, some other steps may be added, or some steps therein may be reduced. And appropriate variants may be made by those skilled in the art according to the above contents, without being limited to what is contained in FIG. 7.

According to the above embodiment, the network device transmits the configuration information to the remote UE, so that the remote UE performs path configuration according to the configuration information in the multi-path scenario, which contributes to the remote UE performing data transmission by using more than one paths and improves reliability and rate of data transmission of the remote UE.

In some embodiments, a path may be added between the network device and the remote UE. For example, if a direct path is established between the network device and the remote UE, an indirect path may also be added between the network device and the remote UE. For example, if an indirect path is established between the network device and the remote UE, a direct path may also be added between the network device and the remote UE.

In some embodiments, a path may be deleted between the network device and the remote UE. For example, if more than one paths are established between the network device and the remote UE, one or more paths therein may be deleted. For example, in a case where a direct path and an indirect path are established between the network device and the remote UE, the direct path may be deleted. For example, the network device may transmit an RRC message (such as an RRC reconfiguration message or an RRC resume message) to the remote UE via the direct path or the indirect path, the message indicating to delete the direct path. Or, the network device may delete the indirect path, for example, the network device may transmit an RRC message (such as an RRC reconfiguration message or an RRC resume message) to the remote UE via the direct path or the indirect path, the message indicating to delete the indirect path. Or, the network device may delete the direct path and the indirect path, for example, the network device may transmit an RRC message (such as an RRC release message or an RRC release message with suspend configuration) to the remote UE via the direct path or the indirect path to release the remote UE to an RRC_Idle or RRC_Inactive state, thereby deleting or releasing the direct path and the indirect path. However, this disclosure is not limited thereto, for example, in a case where a path (a direct path or an indirect path) is established between the network device and the remote UE, the path may be deleted.

In some embodiments, the path between the network device and the remote UE may be modified. For example, in a case where more than one paths are established between the network device and the remote UE, the information of one or more paths in the more than one paths may be modified, such as modifying a transmission mode of the path, and/or a state of the path, and/or configuration of a primary path or a secondary path, and/or configuration of an SRAP layer and/or an RLC layer and/or an MAC layer and/or a physical layer related to the direct path and/or the indirect path, etc.; however, this disclosure is not limited thereto, for example, other information of the path may also be modified.

In some embodiments, the transmission mode of the path may include split transmission and duplication transmission. When the split transmission is used, the direct path and the indirect path may transmit different data, such as different PDCP PDUs. Hence, throughput may be increased. When the duplication transmission is used, both the direct path and the indirect path may transmit identical data, such as transmitting identical PDCP PDUs. Thus, reliability of data transmission of the remote UE may be ensured.

In some embodiments, the state of the path may include an active state, an inactive state, a using state, and a non-using state, etc. A path in an active or using state may be used for data transmission between the remote UE and the network device, and a path in an inactive or non-using state may be used for data transmission between the remote UE and the network device after being activated.

In some embodiments, after deactivating the direct path or the indirect path, the remote UE and the network device may reserve configuration of the path in the inactive state. In a case of deactivating the indirect path, the relay terminal equipment may also reserve the configuration of the path in the inactive state, so as to quickly recover the path in a subsequent communication process. However, this disclosure is not limited thereto, for example, after deactivating the direct path or the indirect path, the remote UE and the network device may not reserve the configuration of the path in the inactive state.

In some embodiments, in the case where there exist more than one paths between the remote UE and the network device, a primary path and a secondary path may be set in the more than one paths. For example, in the more than one paths, a path may be selected as a primary path, and the other path(s) may be taken as secondary path(s).

In some embodiments, the primary path may be a main path responsible for split transmission. For example, the primary path may be a path used for transmission of PDCP control PDUs related to a radio bearer in a case where PDCP duplication is activated, or a path used for transmission of PDCP PDUs when an amount of PDCP data and/or an amount of RLC data waiting for initial transmission is/are less than a threshold in a case where PDCP duplication is deactivated, wherein an RLC entity to which the primary path corresponds may be referred to as a primary RLC entity, and the secondary path(s) may be path(s) responsible for split transmission or duplication transmission other than the primary path. For example, when the remote UE uses two paths, a path other than a primary path is a secondary path.

In some embodiments, the primary path and secondary path(s) may be selected or set according to various rules. For example, the direct path is taken as a primary path, and the indirect path is taken as a secondary path. For another example, a path of good channel quality is taken as a primary path, and a path of poor channel quality is taken as a secondary path, and so on. In addition, a path containing a primary RLC entity (or a primary RLC channel or a primary logical channel, etc.) may be taken as a primary path, and/or a path containing a secondary RLC entity (or a secondary RLC channel or a secondary logical channel, etc.) or containing no primary RLC entity (or primary RLC channel or primary logical channel, etc.) may be taken as a secondary path, wherein the primary RLC entity (or primary RLC channel or primary logical channel, etc.) may be configured by the network device.

In some embodiments, the network device may transmit the configuration information to the remote UE via a direct path. For example, in a case of adding an indirect path, the network device may transmit the configuration information via an established direct path; and in a case of deleting a direct path, the network device may transmit the configuration information via the direct path.

Or, the network device may also transmit the configuration information via an indirect path. For example, in the case of adding a direct path, the network device may transmit the configuration information via an established indirect path; and in the case of deleting an indirect path, the network device may transmit the configuration information via the indirect path. However, this disclosure is not limited thereto, for example, a direct path and/or an indirect path may be selected according to an actual condition to transmit corresponding configuration information.

In some embodiments, the configuration information may include at least one of the following: an identity of the path; information indicating that split transmission or duplication transmission is used between the direct path and the indirect path; information on a state/states of the direct path and/or the indirect path; a correspondence relationship between a radio link control entity or a logical channel and a path; information on a primary path; or an identity/identities or an index/indices of a primary radio link control entity and/ or primary logical channel. However, this disclosure is not limited thereto, for example, the configuration information may further include other information. That is, the configuration information may be one piece of the above information or a combination thereof.

In some embodiments, in configuration information, the identity of the path may be used to indicate a direct path and an indirect path.

In some embodiments, the configuration information may include information indicating a transmission mode of the path, i.e. information indicating that split transmission or duplication transmission is used between the direct path and the indirect path. The information may be indicated for the remote UE, thereby saving signaling overhead. Or, the information may be indicated for a radio bearer (RB), hence, different transmission modes of multiple paths may be adopted for different radio bearers, thereby enabling adopting transmission modes more suitable for QoS of radio bearers according to channel quality, latency, and a block error rate, etc.

In some embodiments, the information on a state/states of the direct path and/or the indirect path in the configuration information may include information indicating activation and/or deactivation of the direct path, and/or information indicating activation and/or deactivation of the indirect path, and/or information on a used path. The information may be indicated for the remote UE, thereby saving signaling overhead. Or, the information may be indicated for a radio bearer (RB), hence, different transmission modes of multiple paths may be adopted for different radio bearers, thereby enabling adopting transmission modes more suitable for QoS of radio bearers according to channel quality, latency, and a block error rate, etc.

In some embodiments, the correspondence relationship between a radio link control (RLC) entity or a logical channel (identity) and a path in the configuration information may be used to indicate which RLC entities or logical channels correspond to the direct path and which RLC entities or logical channels correspond to the indirect path.

In some embodiments, in the configuration information, the information on a primary path may be information indicating a primary path in the direct path and the indirect path. For example, the information on the primary path may represent whether a path to which the path identity corresponds is a primary path or a secondary path by using a 1-bit information bit; or, the information on the primary path may indicate whether the primary path is a direct path or a Uu path or an indirect path or a PC5 path; or, the information on the primary path may indicate whether the primary RLC entity is a Uu-RLC entity or a PC5-RLC entity, if it is a Uu-RLC entity, the primary path is a direct path, and if it is a PC5-RLC entity, the primary path is an indirect path; or, the information on the primary path may indicate an identity of the RLC entity or an identity of the logical channel, and a path containing the identity of the RLC entity or the identity of the logical channel is a primary path. However, this disclosure is not limited thereto, for example, the information on the primary path may also be represented in other forms.

In some embodiments, in the configuration information, the identity/identities or index/indices of the primary RLC entity/primary logical channel may be used to indicate which RLC entities and/or logical channels are used for the primary path.

In some embodiments, in a case where an added path is a direct path, the configuration information may further include at least one of the following:
configuration of a radio link control (RLC) bearer, and/or configuration of a medium access control (MAC) layer, and/or configuration of a physical layer; configuration of a special cell; or configuration of a secondary cell. That is, the configuration information may be one piece of the above information, or a combination thereof.

In some embodiments, a special cell may include common configuration of a serving cell and relevant configuration of random access.

In some embodiments, in a case where the added path is an indirect path, the configuration information further includes at least one of the following: a local identity of the remote UE, configuration of a PC5 sidelink relay adaptation (SRAP) layer, or configuration of a PC5 interface radio link control (RLC) channel. That is, the configuration information may be one piece of the above information, or a combination thereof.

In some embodiments, the local identity of the remote UE is, for example, a local identity used for SRAP layer transmission.

In some embodiments, in a case of deleting a path, the configuration information at least includes an identity or an index of the path. Hence, the remote UE is able to delete a corresponding path after receiving the configuration information.

The multi-path configuration method of the embodiments of this disclosure shall be exemplarily described below by taking adding an indirect path between the remote UE and the network device as an example.

In some embodiments, in adding an indirect path, the network device may transmit first radio resource control (RRC) reconfiguration information for configuring an indirect path, such as an RRC reconfiguration message, to a target relay terminal equipment in an RRC_Connected state, and transmit second radio resource control (RRC) reconfiguration information for configuring an indirect path, such as an RRC reconfiguration message with Reconfiguration with sync IE, to the remote UE. Thus, the relay terminal equipment and the remote UE may configure indirect path(s) respectively according to the first RRC reconfiguration information and the second RRC reconfiguration information.

In some embodiments, the first RRC reconfiguration information includes the configuration information, or includes the configuration information and at least one of the following: a local identity (local ID) and a layer 2 identity (L2 ID) of the remote UE, relay radio link control (RLC) configuration of a Uu interface (an interface between the relay terminal equipment and the network device) and a PC5 interface (an interface between the relay terminal equipment and the remote UE) for relay, or bearer mapping configuration. That is, the first RRC reconfiguration information may be one piece of the above information, or a combination thereof.

In some embodiments, the second radio resource control reconfiguration information may include the configuration information, or may include the configuration information and at least one of the following: a relay terminal equipment identity (relay UE ID), radio link control (RLC) channel configuration of a PC5 interface of a relay service, or a related peer-to-peer radio bearer. That is, the second RRC reconfiguration information may be one piece of the above information, or a combination thereof.

In some embodiments, in adding an indirect path, if the target relay terminal equipment is in a radio resource control inactive (RRC_Inactive) state or a radio resource control idle (RRC_Idle) state, the network device transmits the first RRC reconfiguration information to the target relay terminal equipment after the target relay terminal equipment enters the RRC_Connected state.

In some embodiments, the target relay terminal equipment enters the RRC_Connected state after receiving a radio resource control (RRC) reconfiguration complete message transmitted by the remote UE. For example, in a case where the RRC reconfiguration complete message of the remote UE is transmitted to the network device via an indirect path, the RRC reconfiguration complete message may trigger the target relay terminal equipment to enter the RRC_Connected state.

In some embodiments, the target relay terminal equipment enters the RRC_Connected state upon receiving information related to PC5 connection establishment (such as a direct communication request message, etc.) transmitted by the remote UE or upon transmitting information related to PC5 connection establishment (such as a direct communication accept message, etc.) to the remote UE. For example, in a case where the RRC reconfiguration complete message of the remote UE is transmitted to the network device via a direct path, the target relay terminal equipment needs to be triggered to enter the RRC_Connected state in establishing PC5 connection with the remote UE, such as being triggered to enter the RRC_Connected state upon receiving or transmitting the above information related to establishment of PC5 connection.

In some embodiments, before the network device transmits first RRC reconfiguration information to the target relay terminal equipment or transmits second RRC reconfiguration information to the remote UE, it may receive a first measurement report transmitted by the remote UE for measuring one or more candidate relay terminal equipments. Thus, the network device may determine whether to add an indirect path and/or select a target relay terminal equipment from candidate relay terminal equipments according to the first measurement report.

In some embodiments, the first measurement report includes at least one of the following: an identity of the relay terminal equipment (relay UE ID); a serving cell identity of the relay terminal equipment; or, measurement information of a sidelink. That is, the first measurement report may include one piece of the above information or a combination thereof.

In some embodiments, the measurement information of a sidelink includes: sidelink reference signal receiving power (SL-RSRP) of the candidate relay terminal equipment, and/or sidelink discovery reference signal receiving power (SD-RSRP) of the candidate relay terminal equipment.

In some embodiments, the SD-RSRP may be used when the SL-RSRP is unacquirable.

In some embodiments, the first measurement report may include measurement results of one or more candidate relay terminal equipments under the same network device as the remote UE. For example, the remote UE may determine whether a candidate relay terminal equipment is under the same network device as the remote UE according to a serving cell identity of a relay terminal equipment in a discovery message transmitted by the candidate relay terminal equipment. The serving cell identity may be a cell global ID (CGI) information or a cell identity (cell ID) of the serving cell, which may include an identity of the network device (such as a gNB ID). The identity of the network device may be used by the remote UE to identify whether the relay terminal equipment is under coverage of the same network device as the remote UE. However, this disclosure is not limited thereto, for example, other modes may also be used to determine whether the candidate relay terminal equipment and the remote UE are under the same network device.

In some embodiments, the network device may transmit measurement configurations for one or more candidate relay terminal equipments to the remote UE via a direct path. Thus, the remote UE may perform measurement according to the measurement configuration, so as to generate the first measurement report.

FIG. 8 is another schematic diagram of the multi-path configuration method of the embodiments of the first aspect of this disclosure, showing the configuration method in which the target relay terminal equipment is in the RRC_Connected state. As shown in FIG. 8, the method may include:
801: transmitting measurement configuration by the network device to the remote UE via a direct path;
802: performing measurement on one or more candidate relay terminal equipments by the remote UE according to the measurement configuration, and after discovering and/or measuring candidate UE-to-Network relay UEs, reporting measurement results of one or more candidate relay terminal equipments in the first measurement report;
803: determining by the network device according to the first measurement report to add an indirect path passing the target relay terminal equipment to the remote UE;
804: transmitting the first RRC reconfiguration information by the network device to the target relay terminal equipment;
805: performing RRC reconfiguration by the target relay terminal equipment according to the first RRC reconfiguration information, and after the RRC reconfiguration is completed, transmitting an RRC reconfiguration complete message to the network device;
806: transmitting second RRC reconfiguration information by the network device to the remote UE;
807: performing RRC reconfiguration by the remote UE according to the second RRC reconfiguration information, so as to establish PC5 connection between the remote UE and the target relay terminal equipment; and
808: transmitting an RRC reconfiguration complete message by the remote UE to the network device via a direct path and/or an indirect path to complete a path configuration process.

In some embodiments, as shown in FIG. 8, in adding an indirect path, the target relay terminal equipment may be determined by the network device in 803. However, this disclosure is not limited thereto, for example, in adding an indirect path, the target relay terminal equipment may also be determined by the remote UE in 802. In this case, the remote UE may establish PC5 connection with the target relay terminal equipment when it discovers the target relay terminal equipment in 802. An order of 807 is not limited in this disclosure. In addition, in 808, if the remote UE transmits an RRC reconfiguration complete message to the network device via a direct path, 808 may executed before 807, and an order of 808 is not limited in this disclosure.

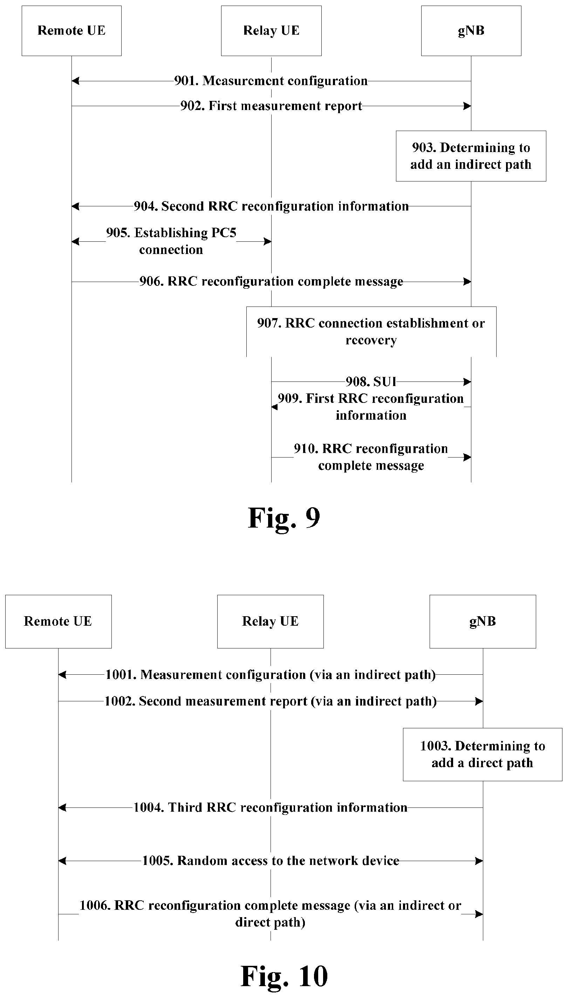

FIG. 9 is a further schematic diagram of the multi-path configuration method of the embodiments of the first aspect of this disclosure, showing the configuration method in which the target relay terminal equipment is in the RRC_Idle state or RRC_Inactive state. As shown in FIG. 9, the method may include:
901: transmitting measurement configuration by the network device to the remote UE via a direct path;
902: performing measurement on one or more candidate relay terminal equipments by the remote UE according to the measurement configuration, and after discovering and/or measuring candidate UE-to-Network relay UEs, reporting measurement results of one or more candidate relay terminal equipments in the first measurement report;
903: determining by the network device according to the first measurement report to add an indirect path passing the target relay terminal equipment to the remote UE;
wherein 901-903 may be steps identical or similar to 801-803;
904: transmitting second RRC reconfiguration information by the network device to the remote UE;
905: performing RRC reconfiguration by the remote UE according to the second RRC reconfiguration information, so as to establish PC5 connection between the remote UE and the target relay terminal equipment;
906: transmitting an RRC reconfiguration complete message by the remote UE to the network device via a direct path;
907: performing RRC connection establishment or recovery by the target relay terminal equipment; for example, the target relay terminal equipment may be triggered to enter the RRC_Connected state after receiving the RRC reconfiguration complete message transmitted by the remote UE; or, the target relay terminal equipment may be triggered to enter the RRC_Connected state in establishing PC5 connection with the remote UE;
908: transmitting sidelink UE information (SUI) by the target relay terminal equipment to the network device;
909: transmitting the first RRC reconfiguration information by the network device to the target relay terminal equipment; and
910: performing RRC reconfiguration by the relay terminal equipment according to the first RRC reconfiguration information, and after the configuration is successful, transmitting an RRC reconfiguration complete message to the network device to complete a path configuration process.

In some embodiments, as shown in FIG. 9, as the target relay terminal equipment is in the RRC_Idle or RRC_Inactive state, the network device is unable to configure candidate relay terminal equipments upon receiving the measurement report transmitted by the remote UE. Therefore, in 904, the network device first configures the remote UE to add an indirect path, and then configures the relay terminal equipment after the target relay terminal equipment enters the RRC_Connected state.

In some embodiments, as shown in FIG. 9, in 906, the remote UE may also transmit an RRC reconfiguration complete message to the network device via an indirect path, that is, the remote UE transmits the RRC reconfiguration complete message to the target relay terminal equipment. After 910, the target relay terminal equipment forwards the RRC reconfiguration complete message of the remote UE received in 906 to the network device.

In some embodiments, in the method for adding an indirect path shown in FIGs. 8 and 9, the remote UE may be accessed to the network device via a direct path in advance. For example, the remote UE may possibly perform cell selection, and initiate initial access after selecting a suitable cell, thereby being connected to the network device and communicating with the network.

The multi-path configuration method of the embodiments of this disclosure shall be exemplarily described below by taking adding a direct path between the remote UE and the network device as an example.

In some embodiments, in adding a direct path, the network device may transmit third radio resource control (RRC) reconfiguration information for adding a direct path to the remote UE.

In some embodiments, the third radio resource control (RRC) reconfiguration information may include the above configuration information, or the third radio resource control (RRC) reconfiguration information may include the above configuration information and random access channel (RACH) configuration. Reference may be made to relevant techniques for contents of the RACH configuration, which shall not be described herein any further.

In some embodiments, before the network device transmits the third radio resource control reconfiguration information for adding a direct path to the remote UE, it may receive, via an indirect path, a second measurement report transmitted by the remote terminal equipment for measuring a Uu interface. Thus, the network device may determine whether to add a direct path according to the second measurement report. Reference may be made to relevant techniques for contents of the second measurement report, which shall not be described herein any further.

In some embodiments, the network device may transmit measurement configuration for measuring the Uu interface to the remote UE via an indirect path. Thus, the remote UE may perform measurement according to the measurement configuration, so as to generate the second measurement report.

FIG. 10 is still another schematic diagram of the multi-path configuration method of the embodiments of the first aspect of this disclosure. As shown in FIG. 10, the method may include:
1001: transmitting the measurement configuration by the network device to the remote UE via the relay terminal equipment (indirect path);
1002: measuring the Uu interface by the remote UE according to the measurement configuration, and reporting a measurement result including the Uu interface in the second measurement report, such as measurement results for a cell and/or a frequency;
1003: determining to add a direct path to the remote UE by the network device according to the second measurement report;
1004: transmitting third RRC reconfiguration information for configuring a direct path by the network device to the remote UE via an indirect path;
1005: performing random access to the network device or not performing random access to the network device by the remote UE according to the third RRC reconfiguration information; for example, in a case where the third RRC reconfiguration information includes RACH configuration, the remote UE performs random access to a gNB. For another example, in a case where TA from the remote UE to the cell is 0 or the gNB instructs the remote UE to skip over random access, the remote UE does not perform random access to the gNB;
1006: transmitting an RRC reconfiguration complete message by the remote UE to the network device via a direct path and/or an indirect path to complete a path configuration process.

In some embodiments, as shown in FIG. 10, in 1006, if the RRC reconfiguration complete message is transmitted to the network device via an indirect path, 1006 may be executed before 1005; and if the RRC reconfiguration complete message is transmitted to the network device via an added direct path, the RRC reconfiguration complete message may be carried by Message 3 in a random access procedure or an uplink message after the random access procedure.

In some embodiments, in the method for adding a direct path shown in FIG. 10, the remote UE may be accessed to the network device via an indirect path in advance. For example, the remote UE may possibly perform relay discovery, perform selection or reselection of relays, and establish connection with the network device and communicate with the network device via a relay terminal equipment after selecting or reselecting a suitable relay terminal equipment.

The above implementations only illustrate the embodiments of this disclosure. However, this disclosure is not limited thereto, for example, appropriate variants may be made on the basis of these implementations. For example, the above implementations may be executed separately, or one or more of them may be executed in a combined manner.

It should be noted that the steps related to this disclosure are described above; however, this disclosure is not limited thereto, for example, the method for transmitting failure information may further include other steps, and reference may be made to relevant techniques for contents of these steps.

It can be seen from the above embodiments that the network device transmits configuration information to the remote UE, so that the remote UE performs path configuration according to the configuration information in a multi-path scenario, which contributes to the remote UE performing data transmission by using more than one paths and improves reliability and rate of data transmission of the remote UE.

### Embodiments of a second aspect

The embodiments of this disclosure provide a multi-path configuration apparatus. The apparatus may be, for example, a network device (such as the network device 403 described above), or may be one or some components or assemblies configured in the network device, with contents identical to those in the embodiments of the first aspect being not going to be described herein any further.

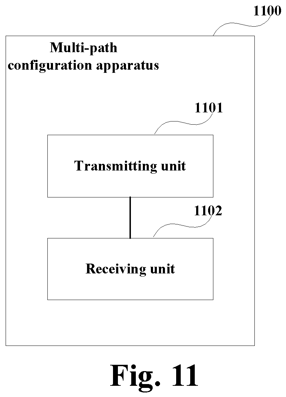

FIG. 11 is a schematic diagram of the multi-path configuration apparatus of the embodiments of the second aspect of this disclosure. As shown in FIG. 11, a multi-path configuration apparatus 1100 includes:
a transmitting unit 1101 configured to transmit configuration information to a remote UE, the configuration information including information for adding and/or modifying and/or deleting a path, the path being a direct path and/or an indirect path between the remote UE and a network device.

In some embodiments, the configuration information includes at least one of the following:
an identity of the path;
information indicating that split transmission or duplication transmission is used between the direct path and the indirect path;
information on a state/states of the direct path and/or the indirect path;
a correspondence relationship between a radio link control entity or a logical channel and a path;
information on a primary path; or
an identity/identities or an index/indices of a primary radio link control entity and/ or primary logical channel.

In some embodiments, in a case where an added path is a direct path, the configuration information further includes at least one of the following:
configuration of a radio link control bearer, and/or configuration of a medium access control layer, and/or configuration of a physical layer,
configuration of a special cell, or
configuration of a secondary cell.

In some embodiments, in a case where the added path is an indirect path, the configuration information further includes at least one of the following:
a local identity of the remote terminal equipment;
configuration of sidelink relay adaptation layer (SRAP) of a PC5 interface; or
configuration of a radio link control (RRC) channel of a PC5 interface.

In some embodiments, the transmitting unit 1101 transmits first radio resource control (RRC) reconfiguration information for configuring an indirect path to a target relay terminal equipment in an RRC_Connected state, and transmits second radio resource control (RRC) reconfiguration information for configuring an indirect path to the remote UE.

In some embodiments, the first RRC reconfiguration information includes the configuration information, or includes the configuration information and at least one of the following:
a local identity (local ID) and a layer 2 identity (L2 ID) of the remote UE, relay radio link control (RLC) configuration of a Uu interface (an interface between the relay terminal equipment and the network device) and a PC5 interface (an interface between the relay terminal equipment and the remote UE) for relay, or bearer mapping configuration.

In some embodiments, the second radio resource control (RRC) reconfiguration information includes the configuration information, or includes the configuration information and at least one of the following:
a relay terminal equipment identity (relay UE ID), radio link control (RLC) channel configuration of a PC5 interface of a relay service, or a related peer-to-peer radio bearer.

In some embodiments, the transmitting unit 1101 transmits third radio resource control (RRC) reconfiguration information for adding a direct path to the remote terminal equipment.

In some embodiments, the third radio resource control (RRC) reconfiguration information includes the above configuration information, or includes the above configuration information and RACH configuration.

In some embodiments, the transmitting unit 1101 transmits measurement configuration for measuring one or more than one candidate relay terminal equipments to the remote terminal equipment via a direct path, or transmits measurement configuration for measuring a Uu interface to the remote terminal equipment via an indirect path.

In some embodiments, the apparatus 1100 further includes:
a receiving unit 1102 configured to receive, via the direct path, a first measurement report transmitted by the remote UE for measuring one or more than one candidate relay UEs.

In some embodiments, the first measurement report includes at least one of the following:
an identity of the relay UE (relay UE ID);
a serving cell identity of the relay terminal equipment (relay UE); or
measurement information of a sidelink (SL).

In some embodiments, the measurement information of a sidelink includes:
sidelink reference signal receiving power (SL-RSRP) of the candidate relay terminal equipment, and/or sidelink discovery reference signal receiving power (SD-RSRP) of the candidate relay terminal equipment.

In some embodiments, the first measurement report includes results of measuring one or more candidate relay terminal equipments under the same network device as the remote UE by the remote UE.

In some embodiments, the receiving unit 1102 may receive via an indirect path a second a report of measuring the Uu interface transmitted by the remote UE.

In some embodiments, the receiving unit 1102 may further receive, via the direct path and/or the indirect path, radio resource control (RRC) reconfiguration complete message transmitted by the remote UE.

In some embodiments, in the case of deleting a path, the configuration information at least includes an identity or index of the path.

The above implementations only illustrate the embodiments of this disclosure. However, this disclosure is not limited thereto, for example, appropriate variants may be made on the basis of these implementations. For example, the above implementations may be executed separately, or one or more of them may be executed in a combined manner.

It should be noted that the components or modules related to this disclosure are only described above. However, this disclosure is not limited thereto, for example, the multi-path configuration apparatus 1100 may further include other components or modules, and reference may be made to related techniques for particulars of these components or modules.

Furthermore, for the sake of simplicity, connection relationships between the components or modules or signal profiles thereof are only illustrated in FIG. 11. However, it should be understood by those skilled in the art that such related techniques as bus connection, etc., may be adopted. And the above components or modules may be implemented by hardware, such as a processor, a memory, a transmitter, and a receiver, etc., which are not limited in the embodiments of this disclosure.

It can be seen from the above embodiments that the network device transmits configuration information to the remote UE, so that the remote UE performs path configuration according to the configuration information in a multi-path scenario, which contributes to the remote UE performing data transmission by using more than one paths and improves reliability and rate of data transmission of the remote UE.

### Embodiments of a third aspect

The embodiments of this disclosure provide a multi-path configuration method, which may be carried out in a network device (such as the network device 403 described above), with contents identical to those in the embodiments of the first aspect being not going to be described herein any further.

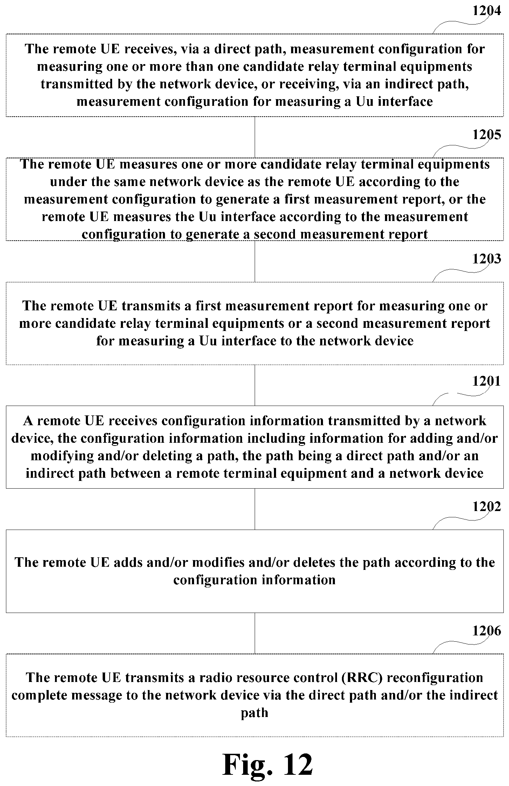

FIG. 12 is a schematic diagram of the multi-path configuration method of the embodiments of the third aspect of this disclosure. As shown in FIG. 12, the method includes:
1201: a remote UE receives configuration information transmitted by a network device, the configuration information including information for adding and/or modifying and/or deleting a path, the path being a direct path and/or an indirect path between a remote terminal equipment and a network device; and
1202: the remote UE adds and/or modifies and/or deletes the path according to the configuration information.

It should be noted that FIG. 12 only schematically illustrates the embodiments of this disclosure; however, this disclosure is not limited thereto. For example, an order of execution of the steps may be appropriately adjusted, and furthermore, some other steps may be added, or some steps therein may be reduced. And appropriate variants may be made by those skilled in the art according to the above contents, without being limited to what is contained in FIG. 12.

According to the above embodiment, the remote UE receives the configuration information transmitted by the network device, and performs path configuration according to the configuration information, which contributes to the remote UE performing data transmission by using more than one paths and improves reliability and rate of data transmission of the remote UE.

In some embodiments, the configuration information includes at least one of the following:
an identity of the path;
information indicating that split transmission or duplication transmission is used between the direct path and the indirect path;
information on a state/states of the direct path and/or the indirect path;
a correspondence relationship between a radio link control entity or a logical channel and a path;
information on a primary path; or
an identity/identities or an index/indices of a primary radio link control entity and/ or primary logical channel.

In some embodiments, in a case where an added path is a direct path, the configuration information further includes at least one of the following:
configuration of a radio link control (RLC) bearer, and/or configuration of a medium access control (MAC) layer, and/or configuration of a physical layer;
configuration of a special cell; or
configuration of a secondary cell (SCell).

In some embodiments, in a case where the added path is an indirect path, the configuration information further includes at least one of the following:
a local identity of the remote UE;
configuration of a PC5 sidelink relay adaptation (SRAP) layer, or
configuration of a PC5 interface radio link control (RLC) channel.

In some embodiments, the method further includes:
1203: the remote UE transmits a first measurement report for measuring one or more candidate relay terminal equipments or a second measurement report for measuring a Uu interface to the network device.

In some embodiments, the first measurement report includes at least one of the following:
an identity of the relay terminal equipment (relay UE ID);
a serving cell identity of the relay terminal equipment (relay UE); or,
measurement information of a sidelink.

In some embodiments, the measurement information of a sidelink includes:
sidelink reference signal receiving power (SL-RSRP) of the candidate relay terminal equipment, and/or sidelink discovery reference signal receiving power (SD-RSRP) of the candidate relay terminal equipment.

In some embodiments, the first measurement report may include measurement results of one or more candidate relay terminal equipments under the same network device as the remote UE.

In some embodiments, the method further includes:
1204: the remote UE receives, via a direct path, measurement configuration for measuring one or more than one candidate relay terminal equipments transmitted by the network device, or receiving, via an indirect path, measurement configuration for measuring a Uu interface.

In some embodiments, the method further includes:
1205: the remote UE measures one or more candidate relay terminal equipments under the same network device as the remote UE according to the measurement configuration to generate a first measurement report, or the remote UE measures the Uu interface according to the measurement configuration to generate a second measurement report.

In some embodiments, in 1205, whether a candidate relay terminal equipment is under the same network device as the remote UE is determined according to a serving cell identity of a relay terminal equipment in a discovery message transmitted by the candidate relay terminal equipment.

In some embodiments, 1201 and 1202 may include:
receiving second radio resource control (RRC) reconfiguration information transmitted by the network device for adding an indirect path; and
adding an indirect path according to the second radio resource control (RRC) reconfiguration information.

In some embodiments, the second radio resource control (RRC) reconfiguration information may include the configuration information, or may include the configuration information and at least one of the following:
a relay terminal equipment identity (relay UE ID), radio link control (RLC) channel configuration of a PC5 interface of a relay service, or a related peer-to-peer radio bearer.

In some embodiments, 1201 and 1202 may include:
receiving third radio resource control (RRC) reconfiguration information transmitted by the network device for adding a direct path; and
performing a random access procedure to the network device according to the third radio resource control (RRC) reconfiguration information, so as to add the direct path.

In some embodiments, the third radio resource control (RRC) reconfiguration information includes the configuration information, or includes the configuration information and RACH configuration.

In some embodiments, the method further includes:
1206: the remote UE transmits a radio resource control (RRC) reconfiguration complete message to the network device via the direct path and/or the indirect path.

In some embodiments, when the RRC reconfiguration complete message is transmitted via a direct path, the RRC reconfiguration complete message is carried by Message 3 in a random access procedure or an uplink message after the random access procedure.

In some embodiments, in the case of deleting a path, the configuration information at least includes an identity or index of the path.

The above implementations only illustrate the embodiments of this disclosure. However, this disclosure is not limited thereto, for example, appropriate variants may be made on the basis of these implementations. For example, the above implementations may be executed separately, or one or more of them may be executed in a combined manner.

It should be noted that the steps related to this disclosure are described above; however, this disclosure is not limited thereto, for example, the method for transmitting failure information may further include other steps, and reference may be made to relevant techniques for contents of these steps.

It can be seen from the above embodiments that the remote UE receives the configuration information transmitted by the network device, and performs path configuration according to the configuration information, which contributes to the remote UE performing data transmission by using more than one paths and improves reliability and rate of data transmission of the remote UE.

### Embodiments of a fourth aspect

The embodiments of this disclosure provide a multi-path configuration apparatus. The apparatus may be, for example, a remote UE (such as the remote UE 401 described above), or may be one or some components or assemblies configured in the remote UE, with contents identical to those in the embodiments of the third aspect being not going to be described herein any further.

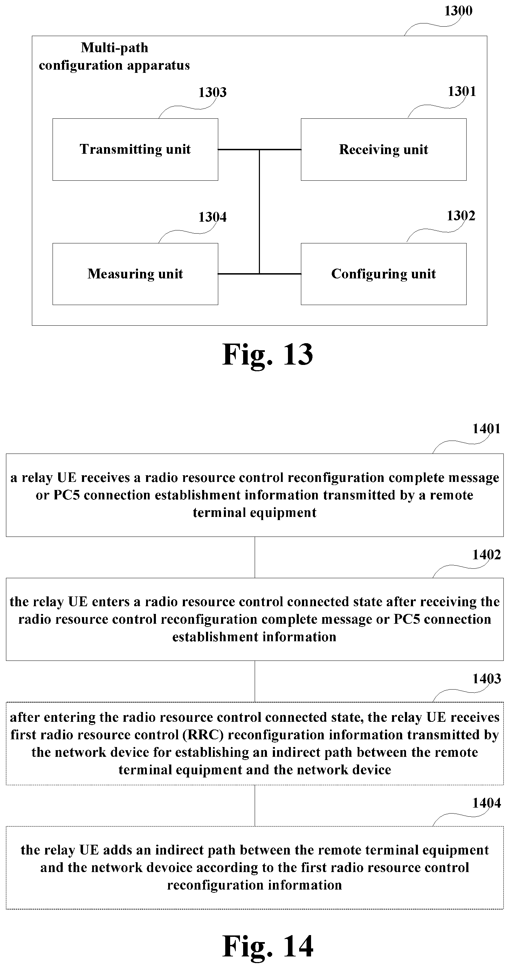

FIG. 13 is a schematic diagram of the multi-path configuration apparatus of the embodiments of the third aspect of this disclosure. As shown in FIG. 13, a multi-path configuration apparatus 1300 includes:
a receiving unit 1301 configured to receive configuration information transmitted by a network device, the configuration information including information for adding and/or modifying and/or deleting a path, the path being a direct path and/or an indirect path between a remote terminal equipment and a network device; and
a configuring unit 1302 configured to add and/or modify and/or delete the path according to the configuration information.

In some embodiments, the configuration information includes at least one of the following:
an identity of the path;
information indicating that split transmission or duplication transmission is used between the direct path and the indirect path;
information on a state/states of the direct path and/or the indirect path;
a correspondence relationship between a radio link control entity or a logical channel and a path;
information on a primary path; or
an identity/identities or an index/indices of a primary radio link control entity and/ or primary logical channel.

In some embodiments, in a case where an added path is a direct path, the configuration information further includes at least one of the following:
configuration of a radio link control bearer, and/or configuration of a medium access control layer, and/or configuration of a physical layer,
configuration of a special cell, or
configuration of a secondary cell.

In some embodiments, in a case where the added path is an indirect path, the configuration information further includes at least one of the following:
a local identity of the remote terminal equipment;
configuration of sidelink relay adaptation layer (SRAP) of a PC5 interface; or
configuration of a radio link control (RRC) channel of a PC5 interface.

In some embodiments, the apparatus 1300 further includes:
a transmitting unit 1303 configured to transmit a first measurement report for measuring one or more candidate relay terminal equipments or a second measurement report for measuring a Uu interface to the network device.

In some embodiments, the first measurement report includes at least one of the following:
an identity of the relay UE (relay UE ID);
a serving cell identity of the relay terminal equipment (relay UE); or
measurement information of a sidelink (SL).

In some embodiments, the measurement information of a sidelink includes:
sidelink reference signal receiving power (SL-RSRP) of the candidate relay terminal equipment, and/or sidelink discovery reference signal receiving power (SD-RSRP) of the candidate relay terminal equipment.

In some embodiments, the first measurement report includes results of measuring one or more candidate relay terminal equipments under the same network device as the remote UE by the remote UE.

In some embodiments, the receiving unit 1301 further receives, via a direct path, measurement configuration for measuring one or more than one candidate relay terminal equipments transmitted by the network device, or receives, via an indirect path, measurement configuration for measuring a Uu interface.

In some embodiments, the apparatus 1300 further includes:
a measuring unit 1304 configured to measure one or more candidate relay terminal equipments under the same network device as the remote UE according to the measurement configuration to generate a first measurement report, or measure the Uu interface according to the measurement configuration to generate a second measurement report.

In some embodiments, the measuring unit 1304 determines whether a candidate relay terminal equipment is under the same network device as the remote UE according to a serving cell identity of a relay terminal equipment in a discovery message transmitted by the candidate relay terminal equipment.

In some embodiments, the receiving unit 1301 receives second radio resource control (RRC) reconfiguration information transmitted by the network device for adding an indirect path, and the configuring unit 1302 adds an indirect path according to the second radio resource control (RRC) reconfiguration information.

In some embodiments, the second radio resource control (RRC) reconfiguration information may include the configuration information, or may include the configuration information and at least one of the following:
a relay terminal equipment identity (relay UE ID), radio link control (RLC) channel configuration of a PC5 interface of a relay service, or a related peer-to-peer radio bearer.

In some embodiments, the receiving unit 1301 receives third radio resource control (RRC) reconfiguration information transmitted by the network device for adding a direct path, and the configuring unit 1302 performs a random access procedure to the network device according to the third radio resource control (RRC) reconfiguration information, so as to add the direct path.

In some embodiments, the third radio resource control (RRC) reconfiguration information includes the configuration information, or includes the configuration information and RACH configuration.

In some embodiments, the transmitting unit 1303 further transmits a radio resource control (RRC) reconfiguration complete message to the network device via the direct path and/or the indirect path.

In some embodiments, when the transmitting unit 1303 transmits the RRC reconfiguration complete message via a direct path, the RRC reconfiguration complete message is carried by Message 3 in a random access procedure or an uplink message after the random access procedure.

In some embodiments, in the case of deleting a path, the configuration information at least includes an identity or index of the path.

The above implementations only illustrate the embodiments of this disclosure. However, this disclosure is not limited thereto, for example, appropriate variants may be made on the basis of these implementations. For example, the above implementations may be executed separately, or one or more of them may be executed in a combined manner.

It should be noted that the components or modules related to this disclosure are only described above. However, this disclosure is not limited thereto, for example, the multi-path configuration apparatus 1300 may further include other components or modules, and reference may be made to related techniques for particulars of these components or modules.

Furthermore, for the sake of simplicity, connection relationships between the components or modules or signal profiles thereof are only illustrated in FIG. 13. However, it should be understood by those skilled in the art that such related techniques as bus connection, etc., may be adopted. And the above components or modules may be implemented by hardware, such as a processor, a memory, a transmitter, and a receiver, etc., which are not limited in the embodiments of this disclosure.

It can be seen from the above embodiments that the remote UE receives the configuration information transmitted by the network device, and performs path configuration according to the configuration information, which contributes to the remote UE performing data transmission by using more than one paths and improves reliability and rate of data transmission of the remote UE.

### Embodiments of a fifth aspect

The embodiments of this disclosure provide a multi-path configuration method, which may be carried out in a relay terminal equipment (such as the relay terminal equipment 402 described above), with contents identical to those in the embodiments of the first and third aspects being not going to be described herein any further.

FIG. 14 is a schematic diagram of the multi-path configuration method of the embodiments of the fifth aspect of this disclosure. As shown in FIG. 14, the method includes:
1401: a relay UE receives a radio resource control reconfiguration complete message or PC5 connection establishment information transmitted by a remote terminal equipment; and
1402: the relay UE enters a radio resource control connected state after receiving the radio resource control reconfiguration complete message or PC5 connection establishment information.

It should be noted that FIG. 14 only schematically illustrates the embodiments of this disclosure; however, this disclosure is not limited thereto. For example, an order of execution of the steps may be appropriately adjusted, and furthermore, some other steps may be added, or some steps therein may be reduced. And appropriate variants may be made by those skilled in the art according to the above contents, without being limited to what is contained in FIG. 14.

According to the above embodiment, the relay terminal equipment enters the radio resource control connected state after receiving the radio resource control reconfiguration complete message or PC5 connection establishment information. Hence, in a multi-path scenario, it contributes to the remote UE performing data transmission by using more than one paths and improves reliability and rate of data transmission of the remote UE.

In some embodiments, the method further includes:
1403: after entering the radio resource control connected state, the relay UE receives first radio resource control (RRC) reconfiguration information transmitted by the network device for establishing an indirect path between the remote terminal equipment and the network device; and
1404: the relay UE adds an indirect path between the remote terminal equipment and the network devoice according to the first radio resource control reconfiguration information.

In some embodiments, the first RRC reconfiguration information includes the configuration information, or includes the configuration information and at least one of the following:
a local identity (local ID) and a layer 2 identity (L2 ID) of the remote UE, relay radio link control (RLC) configuration of a Uu interface (an interface between the relay terminal equipment and the network device) and a PC5 interface (an interface between the relay terminal equipment and the remote UE) for relay, or bearer mapping configuration.

The above implementations only illustrate the embodiments of this disclosure. However, this disclosure is not limited thereto, for example, appropriate variants may be made on the basis of these implementations. For example, the above implementations may be executed separately, or one or more of them may be executed in a combined manner.

It should be noted that the steps related to this disclosure are described above; however, this disclosure is not limited thereto, for example, the method for transmitting failure information may further include other steps, and reference may be made to relevant techniques for contents of these steps.

It can be seen from the above embodiments that the relay terminal equipment enters the radio resource control connected state after receiving the radio resource control reconfiguration complete message or PC5 connection establishment information. Hence, in a multi-path scenario, it contributes to the remote UE performing data transmission by using more than one paths and improves reliability and rate of data transmission of the remote UE.

### Embodiments of a sixth aspect

The embodiments of this disclosure provide a multi-path configuration apparatus. The apparatus may be, for example, a relay terminal equipment (such as the relay terminal equipment 402 described above), or may be one or some components or assemblies configured in the relay terminal equipment, with contents identical to those in the embodiments of the fifth aspect being not going to be described herein any further.

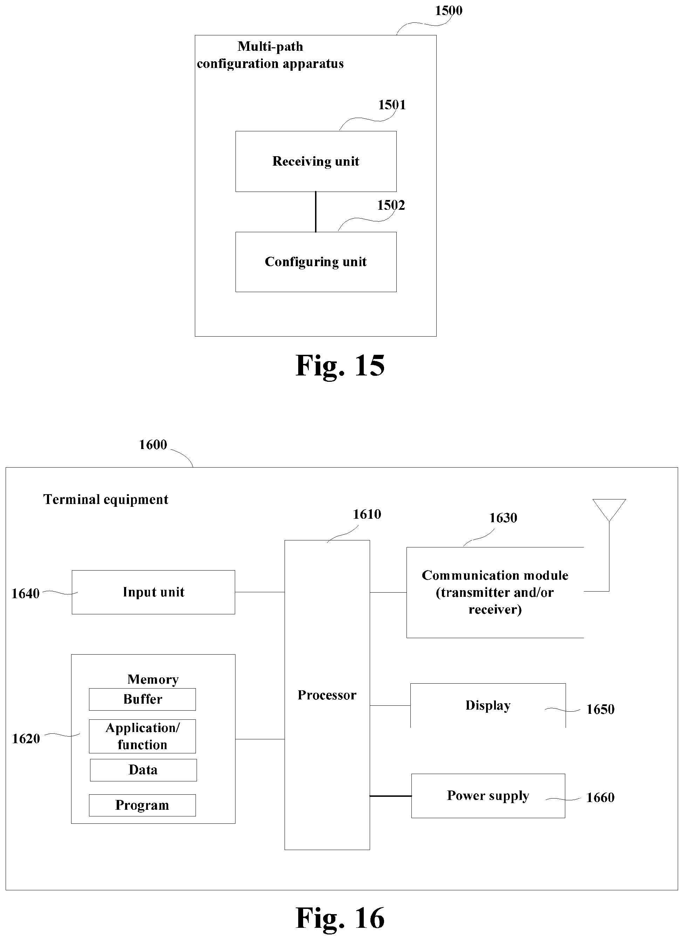

FIG. 15 is a schematic diagram of the multi-path configuration apparatus of the embodiments of the sixth aspect of this disclosure. As shown in FIG. 15, a multi-path configuration apparatus 1500 includes:
a receiving unit 1501 configured to receive a radio resource control reconfiguration complete message or PC5 connection establishment information transmitted by a remote terminal equipment; and
a configuring unit 1502 configured to enter a radio resource control connected state after the receiving unit 1501 receives the radio resource control reconfiguration complete message or PC5 connection establishment information.

In some embodiments, after entering the radio resource control (RRC) connected state, the receiving unit 1501 receives first radio resource control (RRC) reconfiguration information transmitted by the network device for establishing an indirect path between the remote terminal equipment and the network device, and the configuring unit 1502 adds an indirect path between the remote terminal equipment and the network devoice according to the first radio resource control reconfiguration information.

In some embodiments, the first RRC reconfiguration information includes the configuration information, or includes the configuration information and at least one of the following:
a local identity (local ID) and a layer 2 identity (L2 ID) of the remote UE, relay radio link control (RLC) configuration of a Uu interface (an interface between the relay terminal equipment and the network device) and a PC5 interface (an interface between the relay terminal equipment and the remote UE) for relay, or bearer mapping configuration.

The above implementations only illustrate the embodiments of this disclosure. However, this disclosure is not limited thereto, for example, appropriate variants may be made on the basis of these implementations. For example, the above implementations may be executed separately, or one or more of them may be executed in a combined manner.

It should be noted that the components or modules related to this disclosure are only described above. However, this disclosure is not limited thereto, for example, the multi-path configuration apparatus 1500 may further include other components or modules, and reference may be made to related techniques for particulars of these components or modules.

Furthermore, for the sake of simplicity, connection relationships between the components or modules or signal profiles thereof are only illustrated in FIG. 15. However, it should be understood by those skilled in the art that such related techniques as bus connection, etc., may be adopted. And the above components or modules may be implemented by hardware, such as a processor, a memory, a transmitter, and a receiver, etc., which are not limited in the embodiments of this disclosure.

It can be seen from the above embodiments that the relay terminal equipment enters the radio resource control connected state after receiving the radio resource control reconfiguration complete message or PC5 connection establishment information. Hence, in a multi-path scenario, it contributes to the remote UE performing data transmission by using more than one paths and improves reliability and rate of data transmission of the remote UE.

### Embodiments of a seventh aspect

The embodiments of this disclosure provide a communication system, and reference may be made to FIG. 4, with contents identical to those in the embodiments of the first to the sixth aspects being not going to be described herein any further.

In some embodiments, the communication system 400 may at least include: a remote user equipment 401 and/or a network device 403 and/or a relay user equipment 402.

In the embodiments of this disclosure, the network device 403 may be configured to carry out the multi-path configuration method in the embodiments of the first aspect, the contents of which being incorporated herein, which shall not be described herein any further.

In the embodiments of this disclosure, the remote user equipment 401 may be configured to carry out the multi-path configuration method in the embodiments of the third aspect, the contents of which being incorporated herein, which shall not be described herein any further.

In the embodiments of this disclosure, the relay terminal equipment 402 may be configured to carry out the multi-path configuration method in the embodiments of the fifth aspect, the contents of which being incorporated herein, which shall not be described herein any further.

The embodiments of this disclosure further provide a terminal equipment.

FIG. 16 is a schematic diagram of a structure of the terminal equipment of the seventh aspect of the embodiments of this disclosure. The terminal equipment may be a remote user equipment or a relay terminal equipment. As shown in FIG. 16, a terminal equipment 1600 may include a processor 1610 and a memory 1620, the memory 1620 storing data and a program and being coupled to the processor 1610. It should be noted that this figure is illustrative only, and other types of structures may also be used, so as to supplement or replace this structure and achieve a telecommunications function or other functions.

For example, the processor 1610 may be configured to execute a program to carry out the multi-path configuration method in the embodiments of the third aspect. For example, the processor 1610 may be configured to executed the following operation: receiving configuration information transmitted by a network device, the configuration information including information for adding and/or modifying and/or deleting a path, the path being a direct path and/or an indirect path between a remote terminal equipment and a network device; and adding and/or modifying and/or deleting the path according to the configuration information.

For another example, the processor 1610 may be configured to execute a program to carry out the multi-path configuration method in the embodiments of the fifth aspect. For example, the processor 1610 may be configured to executed the following operation: receiving a radio resource control reconfiguration complete message or PC5 connection establishment information transmitted by a remote terminal equipment; and entering a radio resource control connected state after receiving the radio resource control reconfiguration complete message or PC5 connection establishment information.

As shown in FIG. 16, the terminal equipment 1600 may further include a communication module 1630, an input unit 1640, a display 1650, and a power supply 1660, wherein functions of the above components are similar to those in the related art, which shall not be described herein any further. It should be noted that the terminal equipment 1600 does not necessarily include all the parts shown in FIG. 16, and the above components are not necessary. Furthermore, the terminal equipment 1600 may include parts not shown in FIG. 16, and the related art may be referred to.

The embodiments of this disclosure further provide a network device, which may be, for example, a base station. However, this disclosure is not limited thereto, for example, it may also be another network device.

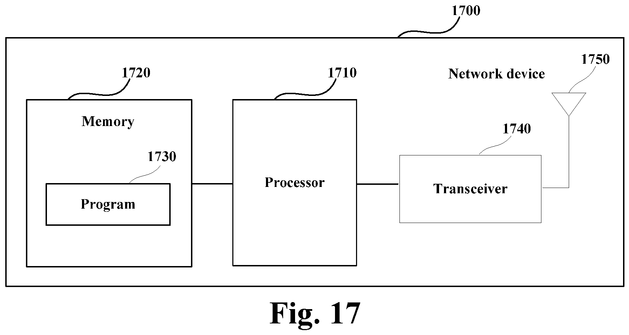

FIG. 17 is a schematic diagram of a structure of the network device of the embodiments of the seventh aspect of this disclosure. As shown in FIG. 17, a network device 1700 may include a processor 1710 (such as a central processing unit (CPU)) and a memory 1720, the memory 1720 being coupled to the processor 1710. The memory 1720 may store various data, and furthermore, it may store a program 1730 for information processing, and execute the program 1730 under control of the processor 1710.

For example, the processor 1710 may be configured to execute the following operation: transmitting configuration information to a remote UE, the configuration information including information for adding and/or modifying and/or deleting a path, the path being a direct path and/or an indirect path between the remote UE and the network device.

Furthermore, as shown in FIG. 17, the network device 1700 may include a transceiver 1740, and an antenna 1750, etc. Functions of the above components are similar to those in the related art, and shall not be described herein any further. It should be noted that the network device 1700 does not necessarily include all the parts shown in FIG. 17, and furthermore, the network device 1700 may include parts not shown in FIG. 17, and the related art may be referred to.

It can be seen from the above embodiments that the network device transmits configuration information to the remote UE, so that the remote UE performs path configuration according to the configuration information in a multi-path scenario, which contributes to the remote UE performing data transmission by using more than one paths and improves reliability and rate of data transmission of the remote UE.

Embodiments of this disclosure provide a computer readable program, which, when executed in a network device, causes a computer to carry out the multi-path configuration method as described in the embodiments of the first aspect in the network device.

Embodiments of this disclosure provide a computer storage medium, including a computer readable program, which causes a computer to carry out the multi-path configuration method as described in the embodiments of the first aspect in a network device.

Embodiments of this disclosure provide a computer readable program, which, when executed in a remote user equipment, causes a computer to carry out the multi-path configuration method as described in the embodiments of the third aspect in the remote user equipment.

Embodiments of this disclosure provide a computer storage medium, including a computer readable program, which causes a computer to carry out the multi-path configuration method as described in the embodiments of the third aspect in a remote user equipment.

Embodiments of this disclosure provide a computer readable program, which, when executed in a relay terminal equipment, causes a computer to carry out the multi-path configuration method as described in the embodiments of the fifth aspect in the relay terminal equipment.

Embodiments of this disclosure provide a computer storage medium, including a computer readable program, which causes a computer to carry out the multi-path configuration method as described in the embodiments of the fifth aspect in a relay terminal equipment.

The above apparatuses and methods of this disclosure may be implemented by hardware, or by hardware in combination with software. This disclosure relates to such a computer-readable program that when the program is executed by a logic device, the logic device is enabled to carry out the apparatus or components as described above, or to carry out the methods or steps as described above. This disclosure also relates to a storage medium for storing the above program, such as a hard disk, a floppy disk, a CD, a DVD, and a flash memory, etc.

The methods/apparatuses described with reference to the embodiments of this disclosure may be directly embodied as hardware, software modules executed by a processor, or a combination thereof. For example, one or more functional block diagrams and/or one or more combinations of the functional block diagrams shown in the drawings may either correspond to software modules of procedures of a computer program, or correspond to hardware modules. Such software modules may respectively correspond to the steps shown in the drawings. And the hardware module, for example, may be carried out by firming the soft modules by using a field programmable gate array (FPGA).

The soft modules may be located in an RAM, a flash memory, an ROM, an EPROM, an EEPROM, a register, a hard disc, a floppy disc, a CD-ROM, or any memory medium in other forms known in the art. A memory medium may be coupled to a processor, so that the processor may be able to read information from the memory medium, and write information into the memory medium; or the memory medium may be a component of the processor. The processor and the memory medium may be located in an ASIC. The soft modules may be stored in a memory of a mobile terminal, and may also be stored in a memory card of a pluggable mobile terminal. For example, if equipment (such as a mobile terminal) employs an MEGA-SIM card of a relatively large capacity or a flash memory device of a large capacity, the soft modules may be stored in the MEGA-SIM card or the flash memory device of a large capacity.

One or more functional blocks and/or one or more combinations of the functional blocks in the drawings may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in this application. And the one or more functional block diagrams and/or one or more combinations of the functional block diagrams in the drawings may also be realized as a combination of computing equipment, such as a combination of a DSP and a microprocessor, multiple processors, one or more microprocessors in communication combination with a DSP, or any other such configuration.

This disclosure is described above with reference to particular embodiments. However, it should be understood by those skilled in the art that such a description is illustrative only, and not intended to limit the protection scope of this disclosure. Various variants and modifications may be made by those skilled in the art according to the spirits and principle of this disclosure, and such variants and modifications fall within the scope of this disclosure.

As to implementations containing the above embodiments, following supplements are further disclosed.
1. A multi-path configuration apparatus, applicable to a network device and including:
   a transmitting unit configured to transmit configuration information to a remote terminal equipment, the configuration information including information for adding and/or modifying and/or deleting a path, the path being a direct path and/or an indirect path between the remote terminal equipment and a network device.
2. The apparatus according to supplement 1, wherein the configuration information includes at least one of the following:
   an identity of the path;
   information indicating that split transmission or duplication transmission is used between the direct path and the indirect path;
   information on a state/states of the direct path and/or the indirect path;
   a correspondence relationship between a radio link control entity or a logical channel and a path;
   information on a primary path; or
   an identity/identities or an index/indices of a primary radio link control entity and/ or primary logical channel.
3. The apparatus according to supplement 2, wherein in a case where an added path is a direct path, the configuration information further includes at least one of the following:
   configuration of a radio link control bearer, and/or configuration of a medium access control layer, and/or configuration of a physical layer;
   configuration of a special cell; or
   configuration of a secondary cell.
4. The apparatus according to supplement 2, wherein in a case where the added path is an indirect path, the configuration information further includes at least one of the following:
   a local identity of the remote terminal equipment;
   configuration of a PC5 interface adaptation layer; or
   configuration of a PC5 interface radio link control channel.
5. The apparatus according to any one of supplements 1-4, wherein,
   the transmitting unit transmits first radio resource control reconfiguration information for configuring an indirect path to a target relay terminal equipment in a radio resource control connected state, and transmits second radio resource control reconfiguration information for configuring an indirect path to the remote terminal equipment.
6. The apparatus according to supplement 5, wherein the first radio resource control reconfiguration information includes the configuration information, or includes the configuration information and at least one of the following:
   a local identity and the layer 2 identity of the remote terminal equipment, relay radio link control configuration of Uu and PC5 interfaces for relay, or bearer mapping configuration.
7. The apparatus according to supplement 5, wherein the second radio resource control reconfiguration information includes the configuration information, or includes the configuration information and at least one of the following:
   a relay terminal equipment identity, radio link control channel configuration of a PC5 interface of a relay service, or a related peer-to-peer radio bearer.
8. The apparatus according to any one of supplements 1-4, wherein,
   the transmitting unit transmits third radio resource control reconfiguration information for adding a direct path to the remote terminal equipment.
9. The apparatus according to supplement 8, wherein,
   the third radio resource control reconfiguration information includes the configuration information, or includes the configuration information and RACH configuration.
10. The apparatus according to any one of supplements 1-9, wherein,
   the transmitting unit transmits measurement configuration for measuring one or more than one candidate relay terminal equipments to the remote terminal equipment via a direct path, or transmits measurement configuration for measuring a Uu interface to the remote terminal equipment via an indirect path.
11. The apparatus according to any one of supplements 1-10, wherein the apparatus further includes:
   a receiving unit configured to receive, via the direct path, a first measurement report transmitted by the remote terminal equipment for measuring one or more than one candidate relay terminal equipments.
12. The apparatus according to supplement 11, wherein the first measurement report includes at least one of the following:
   an identity of the relay terminal equipment (relay UE ID);
   a serving cell identity of the relay terminal equipment (relay UE); or
   measurement information of a sidelink (SL).
13. The apparatus according to supplement 12, wherein the measurement information of a sidelink includes:
   sidelink reference signal receiving power (SL-RSRP) of the candidate relay terminal equipment, and/or sidelink discovery reference signal receiving power (SD-RSRP) of the candidate relay terminal equipment.
14. The apparatus according to any one of supplements 11-13, wherein,
   the first measurement report includes results of measuring one or more candidate relay terminal equipments under the same network device as the remote UE by the remote UE.
15. The apparatus according to any one of supplements 1-10, wherein the apparatus further includes:
   a receiving unit configured to receive, via an indirect path, a second measurement report transmitted by the remote terminal equipment for measuring a Uu interface.
16. The apparatus according to any one of supplements 1-15, wherein,
   the receiving unit further receives, via the direct path and/or the indirect path, radio resource control reconfiguration complete message transmitted by the remote terminal equipment.
17. The apparatus according to supplement 1, wherein,
   in a case of deleting a path, the configuration information at least includes an identity or an index of the path.
18. A multi-path configuration method, applicable to a network device and including:
   transmitting configuration information to a remote terminal equipment, the configuration information including information for adding and/or modifying and/or deleting a path, the path being a direct path and/or an indirect path between the remote terminal equipment and a network device.
19. The method according to supplement 18, wherein the configuration information includes at least one of the following:
   an identity of the path;
   information indicating that split transmission or duplication transmission is used between the direct path and the indirect path;
   information on a state/states of the direct path and/or the indirect path;
   a correspondence relationship between a radio link control entity or a logical channel and a path;
   information on a primary path; or
   an identity/identities or an index/indices of a primary radio link control entity and/ or primary logical channel.
20. The method according to supplement 19, wherein in a case where an added path is a direct path, the configuration information further includes at least one of the following:
   configuration of a radio link control bearer, and/or configuration of a medium access control layer, and/or configuration of a physical layer;
   configuration of a special cell; or
   configuration of a secondary cell.
21. The method according to supplement 19, wherein in a case where the added path is an indirect path, the configuration information further includes at least one of the following:
   a local identity of the remote terminal equipment;
   configuration of a PC5 interface adaptation layer; or
   configuration of a PC5 interface radio link control channel.
22. The method according to any one of supplements 18-21, wherein the method further includes:
   transmitting first radio resource control reconfiguration information for configuring an indirect path to a target relay terminal equipment in a radio resource control connected state,
   the transmitting the configuration information to the remote UE including:
      transmitting second radio resource control (RRC) reconfiguration information for configuring an indirect path to the remote terminal equipment.
23. The method according to supplement 22, wherein the first radio resource control reconfiguration information includes the configuration information, or includes the configuration information and at least one of the following:
   a local identity and the layer 2 identity of the remote terminal equipment, relay radio link control configuration of Uu and PC5 interfaces for relay, or bearer mapping configuration.
24. The method according to supplement 22, wherein the second radio resource control (RRC) reconfiguration information includes the configuration information, or includes the configuration information and at least one of the following:
   a relay terminal equipment identity, radio link control channel configuration of a PC5 interface of a relay service, or a related peer-to-peer radio bearer.
25. The method according to any one of supplements 18-21, wherein the transmitting the configuration information to the remote UE includes:
   transmitting third radio resource control reconfiguration information for adding a direct path to the remote terminal equipment.
26. The method according to supplement 25, wherein,
   the third radio resource control reconfiguration information includes the configuration information, or includes the configuration information and RACH configuration.
27. The method according to any one of supplements 18-26, wherein the method further includes:
   transmitting measurement configuration for measuring one or more than one candidate relay terminal equipments to the remote terminal equipment via a direct path, or transmitting measurement configuration for measuring a Uu interface to the remote terminal equipment via an indirect path.
28. The method according to any one of supplements 18-27, wherein the method further includes:
   receiving, via the direct path, a first measurement report transmitted by the remote terminal equipment for measuring one or more than one candidate relay terminal equipments.
29. The method according to supplement 28, wherein the first measurement report includes at least one of the following:
   an identity of the relay terminal equipment (relay UE ID);
   a serving cell identity of the relay terminal equipment (relay UE); or
   measurement information of a sidelink (SL).
30. The method according to supplement 29, wherein the measurement information of a sidelink includes:
   sidelink reference signal receiving power (SL-RSRP) of the candidate relay terminal equipment, and/or sidelink discovery reference signal receiving power (SD-RSRP) of the candidate relay terminal equipment.
31. The method according to any one of supplements 28-30, wherein,
   the first measurement report includes results of measuring one or more candidate relay terminal equipments under the same network device as the remote UE by the remote UE.
32. The method according to any one of supplements 18-27, wherein the method further includes:
   receiving, via an indirect path, a second measurement report transmitted by the remote terminal equipment for measuring a Uu interface.
33. The method according to any one of supplements 18-32, wherein the method further includes:
   receiving, via the direct path and/or the indirect path, radio resource control reconfiguration complete message transmitted by the remote terminal equipment.
34. The method according to supplement 18, wherein,
   in a case of deleting a path, the configuration information at least includes an identity or an index of the path.
35. A network device, including a memory and a processor, the memory storing a computer program, and the processor being configured to execute the computer program to carry out the multi-path configuration method as described in any one of supplements 18-34.
36. A multi-path configuration apparatus, applicable to a remote UE and including:
   a receiving unit configured to receive configuration information transmitted by a network device, the configuration information including information for adding and/or modifying and/or deleting a path, the path being a direct path and/or an indirect path between a remote terminal equipment and a network device; and
   a configuring unit configured to add and/or modify and/or delete the path according to the configuration information.
37. The apparatus according to supplement 36, wherein the configuration information includes at least one of the following:
   an identity of the path;
   information indicating that split transmission or duplication transmission is used between the direct path and the indirect path;
   information on a state/states of the direct path and/or the indirect path;
   a correspondence relationship between a radio link control entity or a logical channel and a path;
   information on a primary path; or
   an identity/identities or an index/indices of a primary radio link control entity and/ or primary logical channel.
38. The apparatus according to supplement 37, wherein in a case where an added path is a direct path, the configuration information further includes at least one of the following:
   configuration of a radio link control bearer, and/or configuration of a medium access control layer, and/or configuration of a physical layer;
   configuration of a special cell; or
   configuration of a secondary cell.
39. The apparatus according to supplement 37, wherein in a case where the added path is an indirect path, the configuration information further includes at least one of the following:
   a local identity of the remote terminal equipment;
   configuration of a PCS interface adaptation layer; or
   configuration of a PCS interface radio link control channel.
40. The apparatus according to supplement 36, wherein the apparatus further includes:
   a transmitting unit configured to transmit a first measurement report for measuring one or more candidate relay terminal equipments or a second measurement report for measuring a Uu interface to the network device.
41. The apparatus according to supplement 40, wherein the first measurement report includes at least one of the following:
   an identity of the relay terminal equipment (relay UE ID);
   a serving cell identity of the relay terminal equipment (relay UE); or
   measurement information of a sidelink (SL).
42. The apparatus according to supplement 41, wherein the measurement information of a sidelink includes:
   sidelink reference signal receiving power (SL-RSRP) of the candidate relay terminal equipment, and/or sidelink discovery reference signal receiving power (SD-RSRP) of the candidate relay terminal equipment.
43. The apparatus according to supplement 40, wherein,
   the first measurement report includes results of measuring one or more candidate relay terminal equipments under the same network device as the remote UE by the remote UE.
44. The apparatus according to supplement 40, wherein,
   the receiving unit further receives, via a direct path, measurement configuration for measuring one or more than one candidate relay terminal equipments transmitted by the network device, or receives, via an indirect path, measurement configuration for measuring a Uu interface.
45. The apparatus according to supplement 44, wherein the apparatus further includes:
   a measuring unit configured to measure one or more candidate relay terminal equipments under the same network device as the remote UE according to the measurement configuration to generate a first measurement report, or measure the Uu interface according to the measurement configuration to generate a second measurement report.
46. The apparatus according to supplement 45, wherein,
   the measuring unit determines whether a candidate relay terminal equipment is under the same network device as the remote UE according to a serving cell identity of a relay terminal equipment in a discovery message transmitted by the candidate relay terminal equipment.
47. The apparatus according to any one of supplements 36-45, wherein,
   the receiving unit receives second radio resource control (RRC) reconfiguration information transmitted by the network device for adding an indirect path,
   and the configuring unit adds an indirect path according to the second radio resource control (RRC) reconfiguration information.
48. The apparatus according to supplement 47, wherein the second radio resource control (RRC) reconfiguration information includes the configuration information, or includes the configuration information and at least one of the following:
   a relay terminal equipment identity (relay UE ID), radio link control (RLC) channel configuration of a PC5 interface of a relay service, or a related peer-to-peer radio bearer.
49. The apparatus according to any one of supplements 36-45, wherein,
   the receiving unit receives third radio resource control (RRC) reconfiguration information transmitted by the network device for adding a direct path,
   and the configuring unit performs a random access procedure to the network device according to the third radio resource control (RRC) reconfiguration information, so as to add the direct path.
50. The apparatus according to supplement 49, wherein,
   the third radio resource control (RRC) reconfiguration information includes the configuration information, or includes the configuration information and RACH configuration.
51. The apparatus according to supplement 47 or 49, wherein,
   the transmitting unit further transmits radio resource control (RRC) reconfiguration complete message to the network device via the direct path and/or the indirect path.
52. The apparatus according to supplement 51, wherein,
   when the transmitting unit transmits the radio resource control (RRC) reconfiguration complete message via the direct path, the radio resource control reconfiguration complete message is carried in message 3 of the random access procedure or an uplink message after the random access procedure.
53. The apparatus according to supplement 36, wherein,
   in the case of deleting a path, the configuration information at least includes an identity or index of the path.
54. A multi-path configuration method, applicable to a remote UE and including:
   receiving configuration information transmitted by a network device, the configuration information including information for adding and/or modifying and/or deleting a path, the path being a direct path and/or an indirect path between a remote terminal equipment and a network device; and
   adding and/or modifying and/or deleting the path according to the configuration information.
55. The method according to supplement 54, wherein the configuration information includes at least one of the following:
   an identity of the path;
   information indicating that split transmission or duplication transmission is used between the direct path and the indirect path;
   information on a state/states of the direct path and/or the indirect path;
   a correspondence relationship between a radio link control entity or a logical channel and a path;
   information on a primary path; or
   an identity/identities or an index/indices of a primary radio link control entity and/ or primary logical channel.
56. The method according to supplement 55, wherein in a case where an added path is a direct path, the configuration information further includes at least one of the following:
   configuration of a radio link control bearer, and/or configuration of a medium access control layer, and/or configuration of a physical layer;
   configuration of a special cell; or
   configuration of a secondary cell.
57. The method according to supplement 55, wherein in a case where the added path is an indirect path, the configuration information further includes at least one of the following:
   a local identity of the remote terminal equipment;
   configuration of a PC5 interface adaptation layer; or
   configuration of a PC5 interface radio link control channel.
58. The method according to any one of supplements 54-57, wherein the method further includes:
   transmitting a first measurement report for measuring one or more candidate relay terminal equipments or a second measurement report for measuring a Uu interface to the network device.
59. The method according to supplement 58, wherein the first measurement report includes at least one of the following:
   an identity of the relay terminal equipment (relay UE ID);
   a serving cell identity of the relay terminal equipment (relay UE); or
   measurement information of a sidelink (SL).
60. The method according to supplement 59, wherein the measurement information of a sidelink includes:
   sidelink reference signal receiving power (SL-RSRP) of the candidate relay terminal equipment, and/or sidelink discovery reference signal receiving power (SD-RSRP) of the candidate relay terminal equipment.
61. The method according to supplement 58, wherein,
   the first measurement report includes results of measuring one or more candidate relay terminal equipments under the same network device as the remote UE by the remote UE.
62. The method according to supplement 58, wherein the method further includes:
   receiving, via a direct path, measurement configuration for measuring one or more than one candidate relay terminal equipments transmitted by the network device, or receiving, via an indirect path, measurement configuration for measuring a Uu interface.
63. The method according to supplement 62, wherein the method further includes:
   measuring one or more candidate relay terminal equipments under the same network device as the remote UE according to the measurement configuration to generate a first measurement report, or measuring the Uu interface according to the measurement configuration to generate a second measurement report.
64. The method according to supplement 63, wherein the method further includes:
   determining whether a candidate relay terminal equipment is under the same network device as the remote UE according to a serving cell identity of a relay terminal equipment in a discovery message transmitted by the candidate relay terminal equipment.
65. The method according to any one of supplements 54-63, wherein the receiving configuration information transmitted by a network device and adding and/or modifying and/or deleting the path according to the configuration information include:
   receiving second radio resource control (RRC) reconfiguration information transmitted by the network device for adding an indirect path; and
   adding an indirect path according to the second radio resource control (RRC) reconfiguration information.
66. The method according to supplement 65, wherein the second radio resource control (RRC) reconfiguration information includes the configuration information, or includes the configuration information and at least one of the following:
   a relay terminal equipment identity (relay UE ID), radio link control (RLC) channel configuration of a PC5 interface of a relay service, or a related peer-to-peer radio bearer.
67. The method according to any one of supplements 54-63, wherein the receiving configuration information transmitted by a network device and adding and/or modifying and/or deleting the path according to the configuration information include:
   receiving third radio resource control (RRC) reconfiguration information transmitted by the network device for adding a direct path; and
   performing a random access procedure to the network device according to the third radio resource control (RRC) reconfiguration information, so as to add the direct path.
68. The method according to supplement 67, wherein,
   the third radio resource control (RRC) reconfiguration information includes the configuration information, or includes the configuration information and RACH configuration.
69. The method according to supplement 65 or 67, wherein the method further includes:
   transmitting radio resource control (RRC) reconfiguration complete message to the network device via the direct path and/or the indirect path.
70. The method according to supplement 69, wherein,
   when the transmitting unit transmits the radio resource control (RRC) reconfiguration complete message via the direct path, the radio resource control reconfiguration complete message is carried in message 3 of the random access procedure or an uplink message after the random access procedure.
71. The method according to supplement 54, wherein,
   in the case of deleting a path, the configuration information at least includes an identity or index of the path.
72. A remote user equipment, including a memory and a processor, the memory storing a computer program, and the processor being configured to execute the computer program to carry out the multi-path configuration method as described in any one of supplements 36-71.
73. A multi-path configuration apparatus, applicable to a relay terminal equipment and including:
   a receiving unit configured to receive a radio resource control (RRC) reconfiguration complete message or PC5 connection establishment information transmitted by a remote terminal equipment; and
   a configuring unit configured to enter a radio resource control (RRC) connected state after the receiving unit receives the radio resource control (RRC) reconfiguration complete message or PC5 connection establishment information.
74. The apparatus according to supplement 73, wherein,
   after entering the radio resource control (RRC) connected state, the receiving unit receives first radio resource control (RRC) reconfiguration information transmitted by the network device for establishing an indirect path between the remote terminal equipment and the network device,
   and the configuring unit adds an indirect path between the remote terminal equipment and the network devoice according to the first radio resource control (RRC) reconfiguration information.
75. The apparatus according to supplement 74, wherein the first radio resource control (RRC) reconfiguration information includes the configuration information, or includes the configuration information and at least one of the following:
   a local identity (local ID) and a layer 2 identity (L2 ID) of the remote UE, relay radio link control (RLC) configuration of a Uu interface (an interface between the relay terminal equipment and the network device) and a PC5 interface (an interface between the relay terminal equipment and the remote UE) for relay, or bearer mapping configuration.
76. A multi-path configuration method, applicable to a relay terminal equipment and including:
   receiving a radio resource control (RRC) reconfiguration complete message or PC5 connection establishment information transmitted by a remote terminal equipment; and
   entering a radio resource control (RRC) connected state after receiving the radio resource control (RRC) reconfiguration complete message or PC5 connection establishment information.
77. The method according to supplement 76, wherein the method further includes:
   after entering the radio resource control (RRC) connected state, receiving first radio resource control (RRC) reconfiguration information transmitted by the network device for establishing an indirect path between the remote terminal equipment and the network device,
   adding an indirect path between the remote terminal equipment and the network devoice according to the first radio resource control (RRC) reconfiguration information.
78. The apparatus according to supplement 77, wherein the first radio resource control (RRC) reconfiguration information includes the configuration information, or includes the configuration information and at least one of the following:
   a local identity (local ID) and a layer 2 identity (L2 ID) of the remote UE, relay radio link control (RLC) configuration of a Uu interface (an interface between the relay terminal equipment and the network device) and a PC5 interface (an interface between the relay terminal equipment and the remote UE) for relay, or bearer mapping configuration.
79. A relay terminal equipment, including a memory and a processor, the memory storing a computer program, and the processor being configured to execute the computer program to carry out the multi-path configuration method as described in any one of supplements 76-78.
80. A communication system, including the remote user equipment as described in supplement 72 and/or the network device as described in supplement 35 and/or the relay terminal equipment as described in supplement 79.

## Claims

1. A multi-path configuration apparatus, comprising:
a transmitting unit configured to transmit configuration information to a remote terminal equipment, the configuration information including information for adding and/or modifying and/or deleting a path, the path being a direct path and/or an indirect path between the remote terminal equipment and a network device.

2. The apparatus according to claim 1, wherein the configuration information comprises at least one of the following:
an identity of the path;
information indicating that split transmission or duplication transmission is used between the direct path and the indirect path;
information on a state/states of the direct path and/or the indirect path;
a correspondence relationship between a radio link control entity or a logical channel and a path;
information on a primary path; or
an identity/identities or an index/indices of a primary radio link control entity and/or a primary logical channel.

3. The apparatus according to claim 2, wherein,
in a case where an added path is a direct path, the configuration information further includes at least one of the following: configuration of a radio link control bearer, and/or configuration of a medium access control layer, and/or configuration of a physical layer, configuration of a special cell, or configuration of a secondary cell;
and/or,
in a case where an added path is an indirect path, the configuration information further includes at least one of the following: a local identity of the remote terminal equipment, configuration of a PC5 interface adaptation layer, or configuration of a PC5 interface radio link control channel;
and/or,
in a case of deleting a path, the configuration information at least includes an identity or an index of the path.

4. The apparatus according to claim 1, wherein,
the transmitting unit transmits first radio resource control reconfiguration information for configuring an indirect path to a target relay terminal equipment in a radio resource control connected state, and transmits second radio resource control reconfiguration information for configuring an indirect path to the remote terminal equipment.

5. The apparatus according to claim 4, wherein,
the first radio resource control reconfiguration information includes the configuration information, or includes the configuration information and at least one of the following: a local identity and the layer 2 identity of the remote terminal equipment, relay radio link control configuration of Uu and PC5 interfaces for relay, or bearer mapping configuration; and/or
the second radio resource control reconfiguration information includes the configuration information, or includes the configuration information and at least one of the following: a relay terminal equipment identity, radio link control channel configuration of a PC5 interface of a relay service, or a related peer-to-peer radio bearer.

6. The apparatus according to claim 1, wherein,
the transmitting unit transmits third radio resource control reconfiguration information for adding a direct path to the remote terminal equipment.

7. The apparatus according to claim 6, wherein,
the third radio resource control reconfiguration information includes the configuration information, or includes the configuration information and random access channel configuration.

8. The apparatus according to claim 1, wherein,
the transmitting unit transmits measurement configuration for measuring one or more than one candidate relay terminal equipments to the remote terminal equipment via a direct path, or transmits measurement configuration for measuring a Uu interface to the remote terminal equipment via an indirect path.

9. The apparatus according to claim 1, wherein the apparatus further comprises:
a receiving unit configured to receive, via the direct path, a first measurement report transmitted by the remote terminal equipment for measuring one or more than one candidate relay terminal equipments, and/or receives, via an indirect path, a second measurement report transmitted by the remote terminal equipment for measuring a Uu interface.

10. The apparatus according to claim 9, wherein the first measurement report comprises at least one of the following:
an identity of the relay terminal equipment;
a serving cell identity of the relay terminal equipment; or
measurement information of a sidelink.

11. The apparatus according to claim 10, wherein the measurement information of a sidelink comprises:
sidelink reference signal receiving power of the candidate relay terminal equipment, and/or sidelink discovery reference signal receiving power of the candidate relay terminal equipment.

12. The apparatus according to claim 9, wherein,
the receiving unit further receives, via the direct path and/or the indirect path, radio resource control reconfiguration complete message transmitted by the remote terminal equipment.

13. A multi-path configuration apparatus, comprising:
a receiving unit configured to receive configuration information transmitted by a network device, the configuration information including information for adding and/or modifying and/or deleting a path, the path being a direct path and/or an indirect path between a remote terminal equipment and a network device; and
a configuring unit configured to add and/or modify and/or delete the path according to the configuration information.

14. The apparatus according to claim 13, wherein the apparatus further comprises:
a transmitting unit configured to transmit a first measurement report for measuring one or more candidate relay terminal equipments or a second measurement report for measuring a Uu interface to the network device.

15. The apparatus according to claim 14, wherein,
the receiving unit further receives, via a direct path, measurement configuration for measuring one or more than one candidate relay terminal equipments transmitted by the network device, or receives, via an indirect path, measurement configuration for measuring a Uu interface.

16. The apparatus according to claim 13, wherein,
the receiving unit receives second radio resource control reconfiguration information transmitted by the network device for adding an indirect path, and the configuring unit adds an indirect path according to the second radio resource control reconfiguration information;
and/or,
the receiving unit receives third radio resource control reconfiguration information transmitted by the network device for adding a direct path, and the configuring unit performs a random access procedure to the network device according to the third radio resource control reconfiguration information, so as to add the direct path.

17. The apparatus according to claim 14, wherein,
the transmitting unit further transmits radio resource control reconfiguration complete message to the network device via the direct path and/or the indirect path.

18. The apparatus according to claim 17, wherein,
when the transmitting unit transmits the radio resource control reconfiguration complete message via the direct path, the radio resource control reconfiguration complete message is carried in message 3 of the random access procedure or an uplink message after the random access procedure.

19. A multi-path configuration apparatus, comprising:
a receiving unit configured to receive a radio resource control reconfiguration complete message or PC5 connection establishment information transmitted by a remote terminal equipment; and
a configuring unit configured to enter a radio resource control connected state after the receiving unit receives the radio resource control reconfiguration complete message or PC5 connection establishment information.

20. The apparatus according to claim 19, wherein,
after entering the radio resource control connected state, the receiving unit receives first radio resource control reconfiguration information transmitted by the network device for establishing an indirect path between the remote terminal equipment and the network device,
and the configuring unit adds an indirect path between the remote terminal equipment and the network devoice according to the first radio resource control reconfiguration information.
